# EUROPEAN PATENT SPECIFICATION

(11) **EP 4 261 037 B1**
(45) Date of publication and mention of the grant of the patent: **16.04.2025**
(21) Application number: 21903098.8
(22) Date of filing: 11.11.2021
(51) Int. Cl.: B32B 27/00, B32B 27/38, C08G 59/20, C08K 9/10, C09J 163/00, C08J 9/32, C08L 63/00, B32B 9/00, B32B 9/04, B32B 15/092, B32B 27/08, B32B 27/20, C08G 59/04, C08G 59/06, C08G 59/14, C08J 9/00, C08L 71/00

(54) **EPOXY RESIN COMPOSITION, CURED PRODUCT THEREOF, AND LAMINATE**
EPOXIDHARZZUSAMMENSETZUNG, GEHÄRTETES PRODUKT DARAUS UND LAMINAT
COMPOSITION DE RÉSINE ÉPOXYDE, PRODUIT DURCI DE CELLE-CI ET STRATIFIÉ

(30) Priority: 10.12.2020 JP 2020204861
(43) Date of publication of application: 18.10.2023
(73) Proprietor: DIC Corporation, Tokyo 174-8520 (JP)
(72) Inventor: OTSU, Masato, Sakura-shi, Chiba 285-8668 (JP); ARITA, Kazuo, Sakura-shi, Chiba 285-8668 (JP)
(74) Representative: TBK
(86) International application number: PCT/JP2021/041446
(87) International publication number: WO 2022/123994

(56) References cited:
- EP-A1- 3 730 531
- WO-A1-2020/059305
- JP-A- 2000 336 318
- JP-A- 2003 171 648
- JP-A- 2003 176 459
- JP-A- 2006 225 544
- JP-A- 2014 111 698

## Description

### Technical Field

The present invention relates to an epoxy resin composition containing an epoxy resin having a specific structure, a cured product of the same, and a laminate including a layer containing the cured product.

### Background Art

From the viewpoint of reducing carbon dioxide emissions and improving fuel efficiency, there is a growing demand for technologies to reduce the weight of automobiles, airplanes, and the like. For example, weight reduction has been promoted by reducing the number of spot welds and combining CFRP and metal. In order to achieve this, it is essential to improve the performance of bonding agents for structural materials. In particular, in the heat bonding of aluminum and CFRP, where there is a large thermal expansion difference, the generation of warping and rippling due to interface stress caused by expansion and contraction is considered to be a problem, and a bonding agent relieving stress is needed.

On the other hand, achieving high adhesion performance also results in products that are difficult to recycle, limiting dismantlability and reusability after use. With the recent increase in environmental awareness, it is important to develop bonding agents that can be easily removed after a period of use while maintaining high adhesion performance.

Against this background, the development of easily dismantlable bonding agents has been actively pursued. In general, thermal melting of thermoplastic resins is used in many cases, but in recent years, techniques have been developed in which thermosetting resins are pre-mixed with thermally expandable materials or thermally degradable compounds and then peeled off after use mainly by applying thermal energy to reduce adhesive strength (refer to JP-A-2003-286464 and JP-A-2013-256557, for example).

However, the technique of JP-A-2003-286464 basically uses a conventional epoxy resin composition as a bonding agent, and it is difficult to fully express foaming by the thermally expandable material within a cured product (adhesive layer), resulting in insufficient peelability or inability to remove the adhesive layer cleanly due to its rigid and brittle nature. In addition, the technique of JP-A-2013-256557 has the complication in use of requiring a high degree of control of a heating temperature during a curing reaction due to the inclusion of the thermally decomposable compound in advance, and there is still some possibility that too much heat may be applied to the bonding agent in unexpected places to cause problems, especially when using a metal substrate with high thermal conductivity.

Further, WO 2020059305 A1 discloses a resin composition comprising an epoxy compound A, which has a specific structure including an aromatic ring and has an epoxy equivalent in the range of 500-10,000 g/eq, and an epoxy compound B, which has an epoxy equivalent in the range of 100-300 g/eq, and an adhesive comprising the resin composition. EP 3730531 A1 discloses a specific epoxy compound.

### Summary of Invention

### Technical Problem

In view of the above circumstances, a task to be achieved by the present invention is to provide an epoxy resin composition that can be suitably used as a structural bonding agent and the like, the epoxy resin composition having flexibility resistant to deformation, having excellent adhesion to a substrate, and being capable of easily achieving dismantlability after use.

### Solution to Problem

The present inventors have conducted extensive and intensive studies. As a result, it has been found that, by using an epoxy resin having a specific structure and blending thermally expandable particles into a resin composition, the above-mentioned problems can be solved to complete the invention.

Specifically, the present invention provides an epoxy resin composition containing:
an epoxy resin (A) having an epoxy equivalent of 500 to 10,000 g/eq represented by the general formula (1) below: 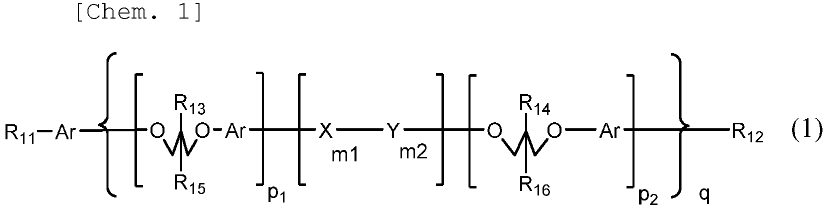
wherein, in the formula (1), each Ar is independently a structure having an aromatic ring being unsubstituted or having a substituent,
X is a structural unit represented by the general formula (2) below, and Y is a structural unit represented by the general formula (3) below: 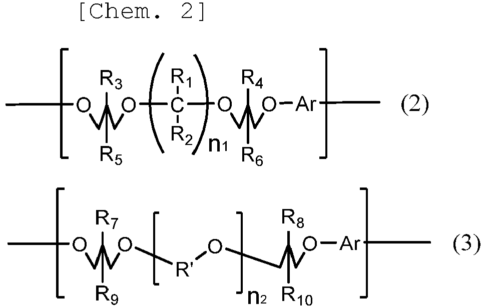
wherein in the formulae (2) and (3), Ar is the same as above,
each of R₁ and R₂ is independently a hydrogen atom, a methyl group, or an ethyl group,
R' is a divalent hydrocarbon group having 2 to 12 carbon atoms,
each of R₃, R₄, R₇, and R₈ is independently a hydroxyl group, a glycidyl ether group, or a 2-methylglycidyl ether group,
each of R₅, R₆, R₉, and R₁₀ is independently a hydrogen atom or a methyl group,
n1 is an integer of 4 to 16,
n2 is an average of the number of repeating units, and 2 to 30,
each of R₁₁ and R₁₂ is independently a glycidyl ether group or a 2-methyl glycidyl ether group,
each of R₁₃ and R₁₄ is independently a hydroxyl group, a glycidyl ether group, or a 2-methyl glycidyl ether group,
R₁₅ and R₁₆ are a hydrogen atom or a methyl group,
m1, m2, p1, p2, and q are an average of the number of repeating units,
each of m1 and m2 is independently 0 to 25, and m1 + m2 ≥ 1,
each of p1 and p2 is independently 0 to 5, and
q is 0.5 to 5, wherein, a bond between X represented by the general formula (2) above and Y represented by the general formula (3) above is optionally random or block, indicating that the total numbers of the numbers of the structural units X and Y present in one molecule are m1 and m2, respectively;
an epoxy resin (B) having an epoxy equivalent of 100 to 300 g/eq; and
thermally expandable particles (C). The present invention also provides a cured product of the same and a laminate having the cured product as an adhesive layer. Advantageous Effects of Invention

According to the present invention, by using an epoxy resin having a long-chain alkylene chain or polyether chain in one molecule, the cured product can be provided with both flexibility assuming elastic deformation and high adhesion properties to a substrate. By further containing the thermally expandable particles, thermal expansion can be effectively expressed in the cured product (adhesive layer) after use due to its high flexibility, resulting in having easy dismantlability (peelability). These factors can make the epoxy resin composition of the present invention suitable for use as a structural bonding agent and the like. Description of Embodiments

The present invention is an epoxy resin composition containing:
an epoxy resin (A) having an epoxy equivalent of 500 to 10,000 g/eq represented by the general formula (1) below: 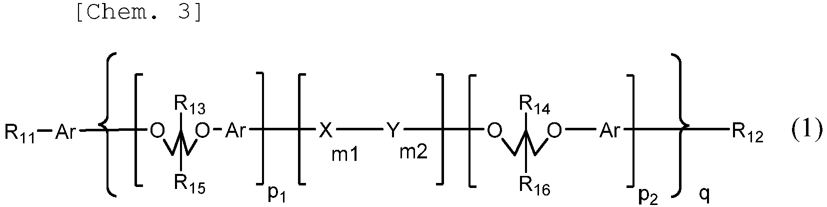
wherein, in the formula (1), each Ar is independently a structure having an aromatic ring being unsubstituted or having a substituent,
X is a structural unit represented by the general formula (2) below, and Y is a structural unit represented by the general formula (3) below: 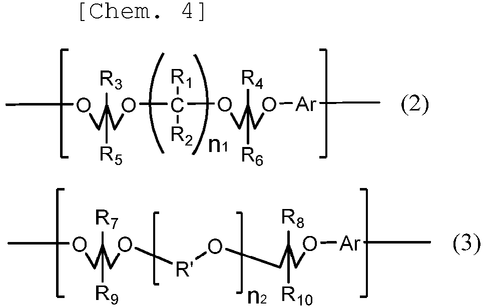
wherein in the formulae (2) and (3), Ar is the same as above,
each of R₁ and R₂ is independently a hydrogen atom, a methyl group, or an ethyl group,
R' is a divalent hydrocarbon group having 2 to 12 carbon atoms,
each of R₃, R₄, R₇, and R₈ is independently a hydroxyl group, a glycidyl ether group, or a 2-methylglycidyl ether group,
each of R₅, R₆, R₉, and R₁₀ is independently a hydrogen atom or a methyl group,
n1 is an integer of 4 to 16,
n2 is an average of the number of repeating units, and 2 to 30,
each of R₁₁ and R₁₂ is independently a glycidyl ether group or a 2-methyl glycidyl ether group,
each of R₁₃ and R₁₄ is independently a hydroxyl group, a glycidyl ether group, or a 2-methyl glycidyl ether group,
R₁₅ and R₁₆ are a hydrogen atom or a methyl group,
m1, m2, p1, p2, and q are an average of the number of repeating units,
each of m1 and m2 is independently 0 to 25, and m1 + m2 ≥ 1,
each of p1 and p2 is independently 0 to 5, and
q is 0.5 to 5, wherein, a bond between X represented by the general formula (2) above and Y represented by the general formula (3) above is optionally random or block, indicating that the total numbers of the numbers of the structural units X and Y present in one molecule are m1 and m2, respectively;
an epoxy resin (B) having an epoxy equivalent of 100 to 300 g/eq; and
thermally expandable particles (C).

The epoxy resin (A) contains in its structure a structural unit X represented by the general formula (2) and/or a structural unit Y represented by the general formula (3), and the presence of an alkylene chain or a polyether chain in each structural unit makes it possible to express high flexibility in a cured product. In particular, the flexibility by the alkylene chain makes it possible to follow the thermal expansion of a substrate when this is used as a bonding agent, and the polyether chain has the effect of lowering the viscosity of the epoxy resin (A) itself, thus contributing to improved coatability and workability as the epoxy resin composition.

The epoxy resin (A) may have the structural units X and Y each alone or may have both the structural units X and Y in one molecule. In this case, X and Y may be block bonded or randomly bonded, indicating that the total numbers of the structural unit X and the structure unit Y contained in one molecule are m₁ and m₂, respectively.

Ar in the general formula (1) representing the epoxy resin (A), Ar in the general formula (2) representing the structural unit X, and Ar in the general formula (3) representing the structural unit Y are all structures having an aromatic ring being unsubstituted or having a substituent. With respect to this aromatic ring, there is no particular limitation, and examples include a benzene ring, a naphthalene ring, an anthracene ring, a phenanthrene ring, and a fluorene ring.

Of these, Ar is preferably any of the structures represented by the structural formula (4) below. 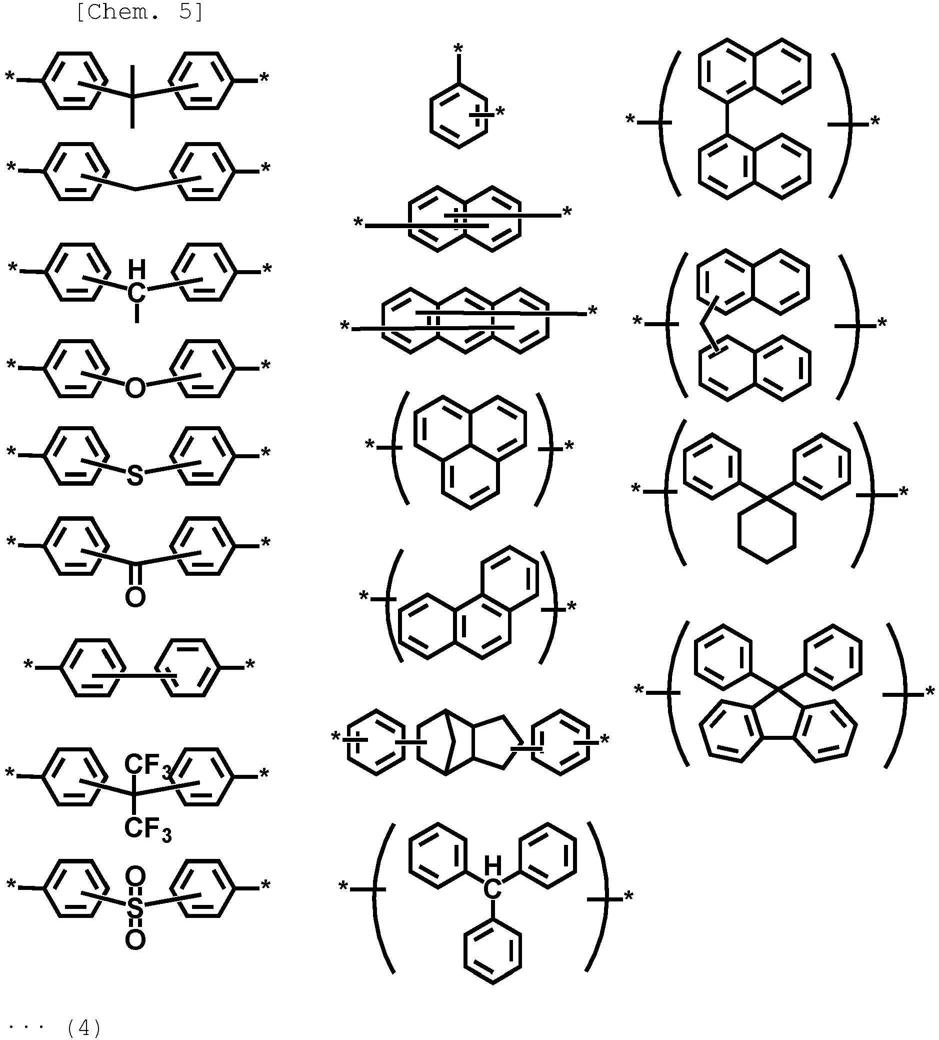 wherein, the aromatic ring in the formula (4) is substituted or unsubstituted, and * represents a bonding site.

Further, examples of Ar also include the structures represented by the formulae below. 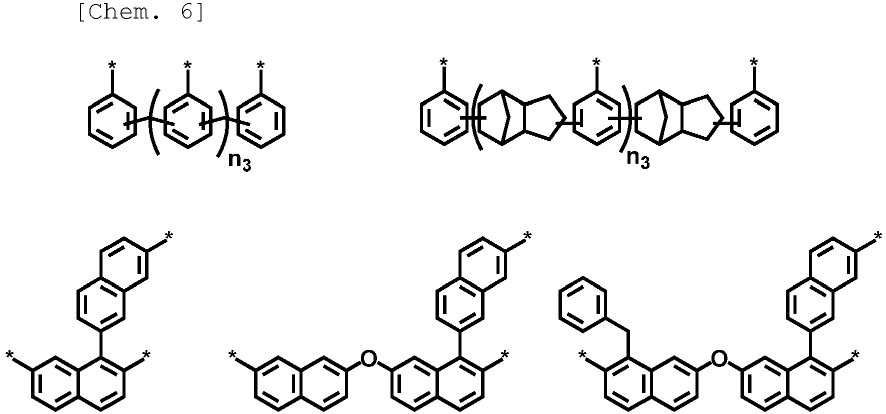 wherein, in the formulae, the aromatic ring is substituted or unsubstituted, n₃ = 1 to 4, and * represents a bonding site.

The aromatic ring of Ar is substituted or unsubstituted, and when Ar has a substituent, preferred examples of substituents include an alkyl group, a halogen atom, a glycidyl ether group, a 2-methylglycidyl ether group. Preferred is being unsubstituted, an alkyl group, a glycidyl ether group, or a 2-methylglycidyl ether group. Having two or less substituents per aromatic ring is preferred, one or less is more preferred, and being unsubstituted is especially preferred.

With respect to the structure of Ar, the following structures are especially preferred. * represents a bonding site.

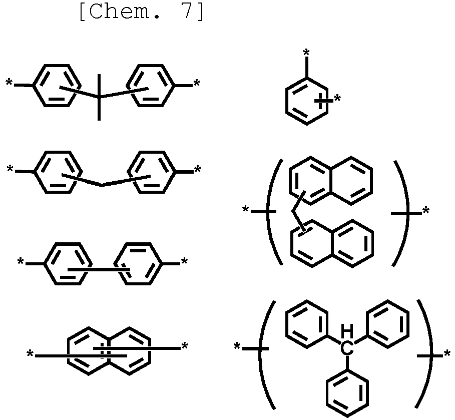

As examples of especially preferred structures of Ar having a substituent, there can be mentioned the following structures. * represents a bonding site.

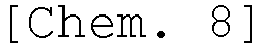

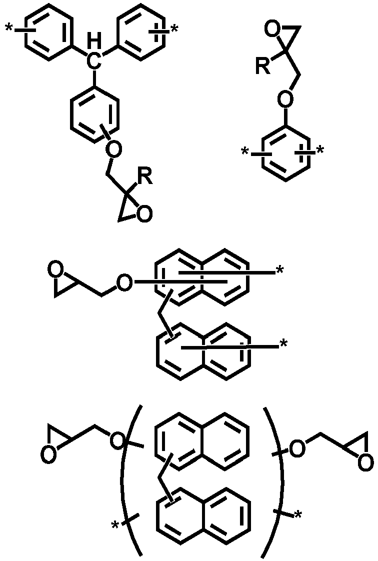

In the structural unit X represented by the general formula (2) above, the number of repeating units n₁ is an integer of 4 to 16. When n₁ is 4 or more, the adhesive force is improved, and further the cured product has a deformation mode which is elastic deformation. Further, when n₁ is 16 or less, lowering of the crosslinking density can be suppressed. The number of repeating units n₁ is preferably 4 to 15 and more preferably 6 to 12.

In the structural unit X represented by the general formula (2) above, each of R₁ and R₂ is independently a hydrogen atom, a methyl group, or an ethyl group, each of R₃, R₄ is independently a hydroxyl group, a glycidyl ether group, or a 2-methylglycidyl ether group, and each of R₅ and R₆ is independently a hydrogen atom or a methyl group.

Of these, R₃ and R₄ are preferably a hydroxyl group and R₅ and R₆ are preferably a hydrogen atom.

In the structural unit Y represented by the general formula (3) above, n₂ is an average of the number of repeating units, and 2 to 30. Being in this range is preferred because it provides a good balance between the viscosity of the epoxy resin (A) and the crosslinking density of the obtained cured product. The number of repeating units n₂ is preferably 2 to 25 and more preferably 4 to 20.

In the structural unit Y represented by the general formula (3) above, R' is a divalent hydrocarbon group having 2 to 12 carbon atoms. Being in this range improves adhesive strength and makes the deformation mode of the cured product elastic deformation. R' is preferably a divalent hydrocarbon group having 2 to 6 carbon atoms.

With respect to the divalent hydrocarbon group, there is no particular limitation, and examples include a linear-chain or branched-chain alkylene group, alkenylene group, alkynylene group, cycloalkylene group, arylene group, and aralkylene group (a divalent group having an alkylene group and an arylene group).

Examples of the alkylene group include a methylene group, an ethylene group, a propylene group, a butylene group, a pentylene group, a hexylene group, a trimethylene group, a tetramethylene group, a pentamethylene group, and a hexamethylene group. Examples of the alkenylene group include a vinylene group, a 1-methylvinylene group, a propenylene group, a butenylene group, and a pentenylene group. Examples of the alkynylene group include an ethynylene group, a propynylene group, a butynylene group, a pentynylene group, and a hexynylene group. Examples of the cycloalkylene group include a cyclopropylene group, a cyclobutylene group, a cyclopentylene group, and a cyclohexylene group. Examples of the arylene group include a phenylene group, a tolylene group, a xylylene group, and a naphthylene group.

Of these, from the viewpoint of the balance of raw material availability, the viscosity of the obtained epoxy resin (A), and flexibility when made into the cured product, the divalent hydrocarbon group is preferably an ethylene group, a propylene group, or a tetramethylene group.

In the structural unit Y represented by the general formula (3) above, each of R₇ and R₈ is independently a hydroxyl group, a glycidyl ether group, or a 2-methylglycidyl ether group and each of R₉ and R₁₀ is independently a hydrogen atom or a methyl group. R₇ and R₈ are preferably a hydroxyl group and R₉ and R₁₀ are preferably a hydrogen atom.

As described above, the epoxy resin (A) for use in the present invention is represented by the general formula (1) above. Each of m1 and m2 in the general formula (1) above is an average of the number of repeating units of the structural unit X and the structural unit Y, respectively, and independently 0 to 25, and m1 + m2 ≥ 1.

Each of R₁₁ and R₁₂ in the general formula (1) above is independently a glycidyl ether group or a 2-methylglycidyl ether group, each of R₁₃ and R₁₄ is independently a hydroxyl group, a glycidyl ether group, or a 2-methylglycidyl ether group, R₁₅ and R₁₆ are a hydrogen atom or a methyl group, p1, p2, and q are an average of the number of repeating units, and each of p1 and p2 is independently 0 to 5 and q is 0.5 to 5. Of these, R₁₁ and R₁₂ are preferably a glycidyl ether group, R₁₃ and R₁₄ are preferably a hydroxyl group, and R₁₅ and R₁₆ are preferably a hydrogen atom. p1 and p2 are preferably 0 to 2 and q is preferably 0.5 to 2.

Further, the epoxy equivalent of the epoxy resin (A) for use in the present invention is 500 to 10,000 g/eq. Being in this range provides an excellent balance between the flexibility and the crosslinking density of the obtained cured product. From the viewpoint of ease of handling and a better balance between flexibility and crosslinking density, being in the range of 600 to 8,000 g/eq is preferred, and being in the range of 800 to 5,000 g/eq is more preferred.

Of the epoxy resin (A) of the present invention, as examples having both the structural unit X and the structural unit Y in one molecule, there can be mentioned resins with the following structural formulae.

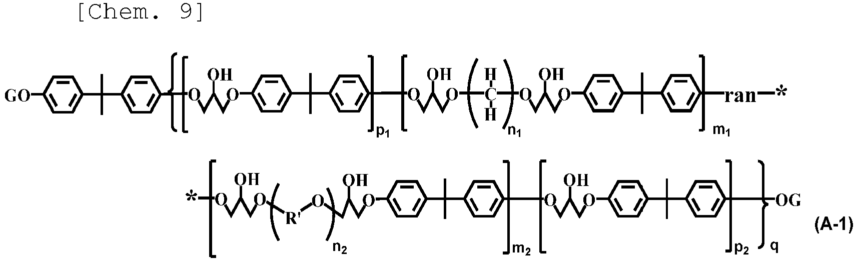

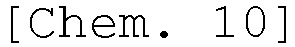

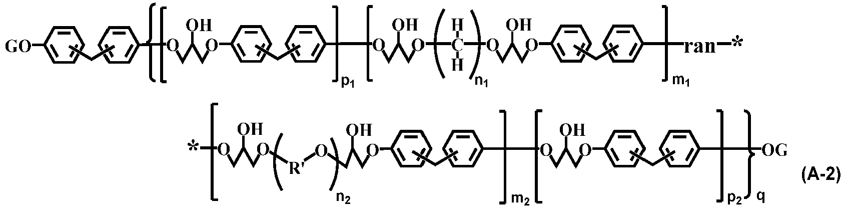

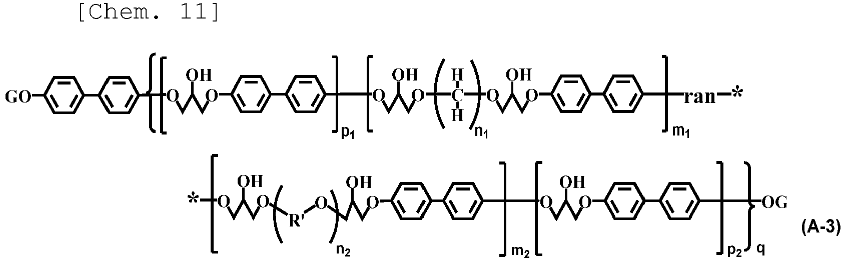

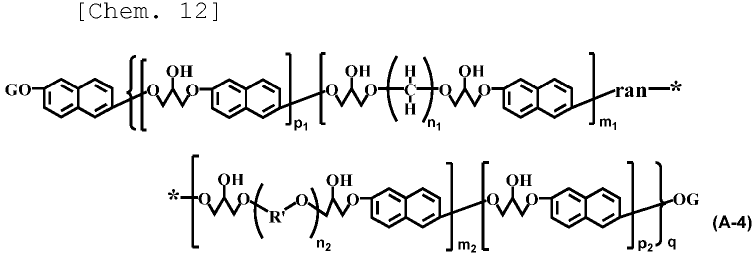

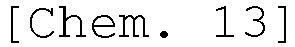

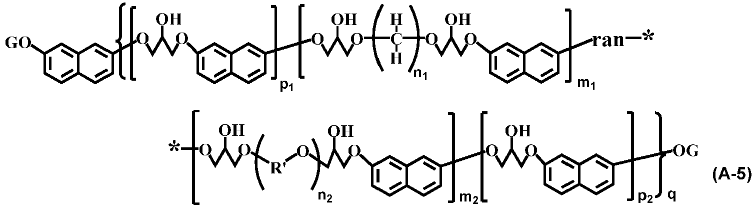

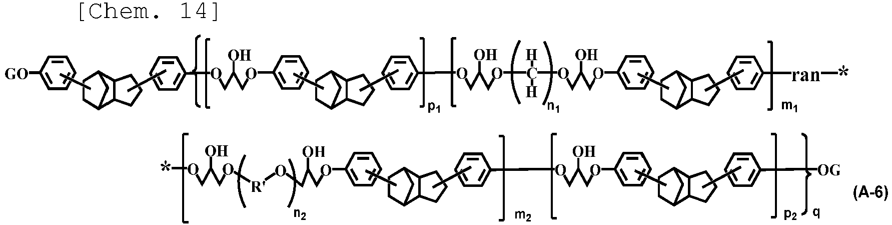

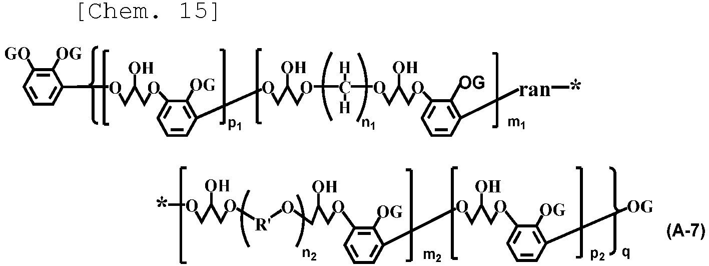

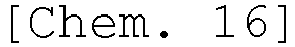

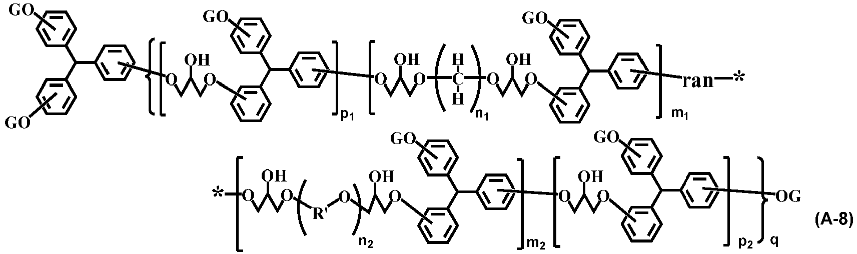

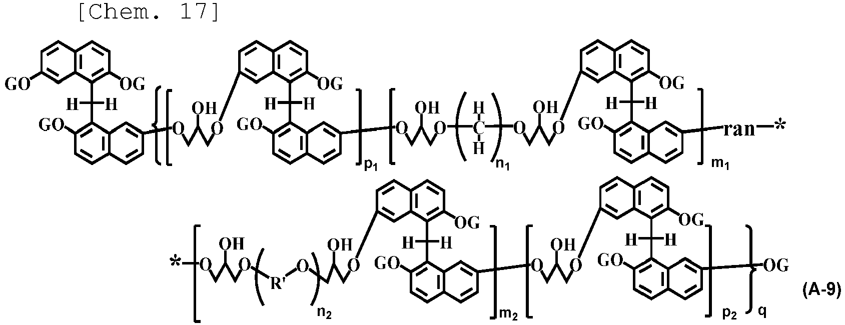

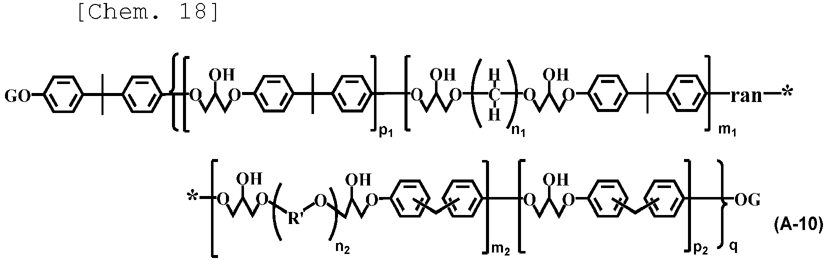

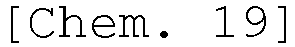

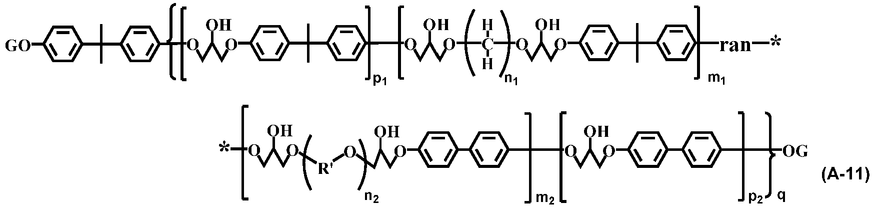

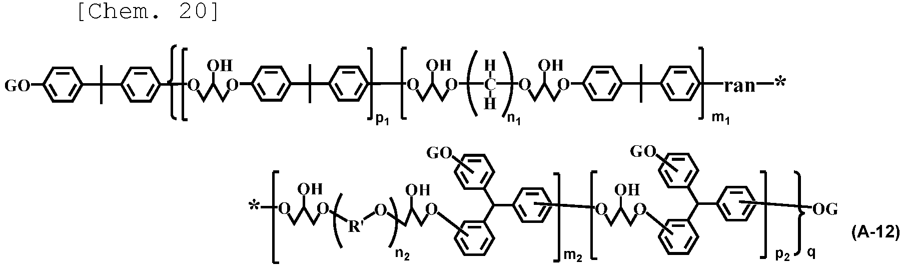

In each of the structural formulae (A-1) to (A-12) above, ran represents a random bond, G is a glycidyl group, R' indicates a divalent hydrocarbon group having 2 to 12 carbon atoms, n₁ is an integer of 4 to 16, n₂ is an average of the number of repeating units, and 2 to 30, m1, m2, p1, p2, and q are an average of the number of repeating units, and each of m1 and m2 is independently 0.5 to 25, each of p1 and p2 is independently 0 to 5, and q is 0.5 to 5. Note that the individual repeating units present in the repeating units of the structure are the same or different.

Of the above structural formulae, from the viewpoint of the obtained cured product which has better balance of physical properties, that represented by the structural formula (A-1), (A-2), (A-3), (A-5), (A-7), (A-8), or (A-9) above is most preferably used.

Of the epoxy resin (A), as examples of the epoxy resin having the structural unit X, there can be mentioned resins represented by the following structural formulae.

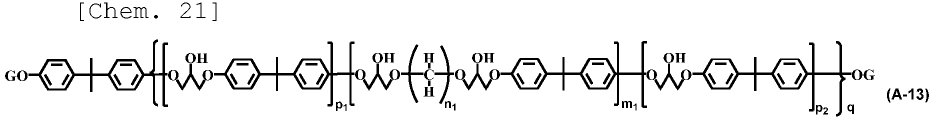

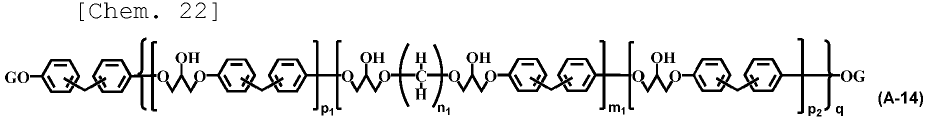

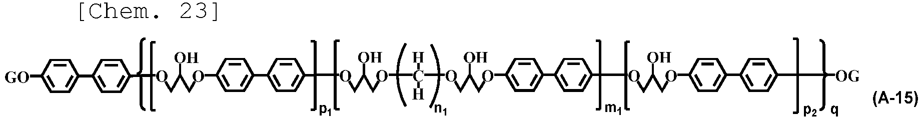

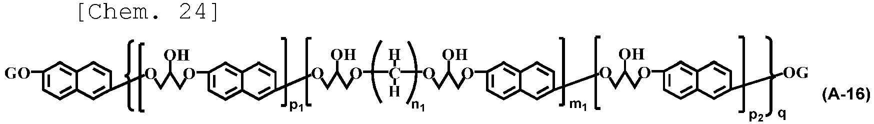

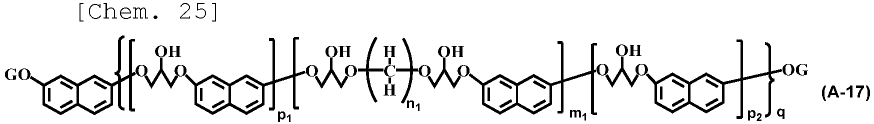

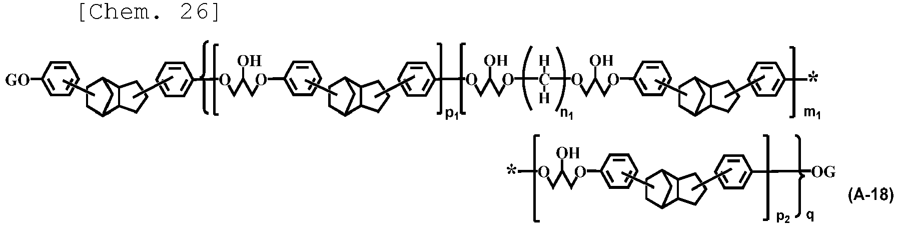

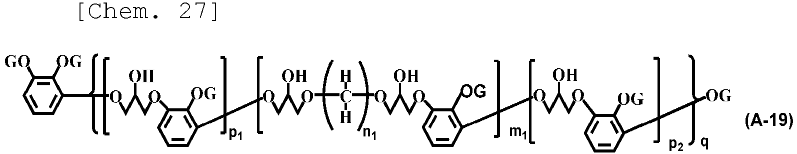

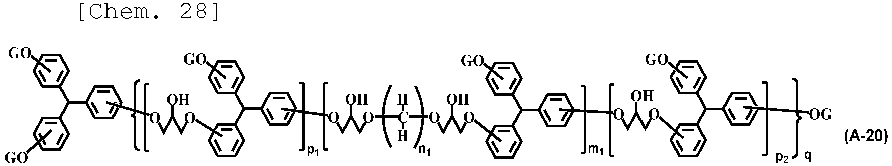

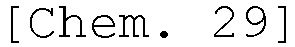

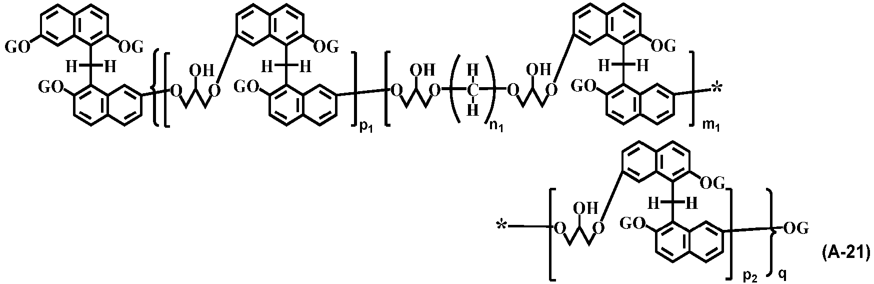

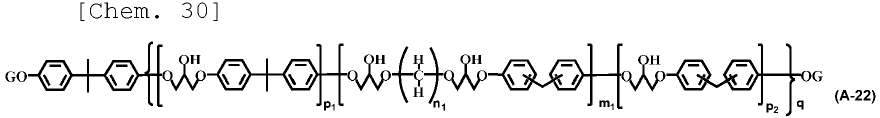

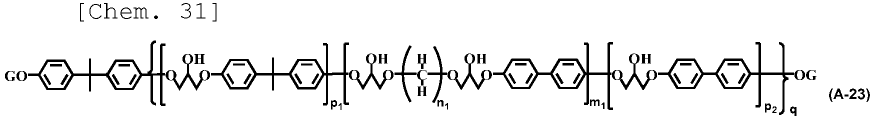

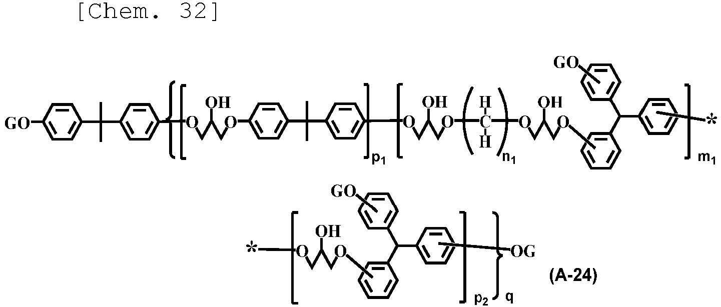

In each of the structural formulae (A-13) to (A-24) above, G is a glycidyl group, n₁ is an integer of 4 to 16, m1, p1, p2, and q are an average of the number of repeating units, m1 is 0.5 to 25, each of p1 and p2 is independently 0 to 5, and q is 0.5 to 5. Note that the individual repeating units present in the repeating units of the structure are the same or different.

Of the above structural formulae, from the viewpoint of the obtained cured product which has better balance of physical properties, that represented by the structural formula (A-13), (A-14), (A-15), (A-17), (A-19), (A-20), or (A-21) above is preferably used.

Of the epoxy resin (A), as examples of the epoxy resin having the structural unit Y, there can be mentioned resins represented by the following structural formulae.

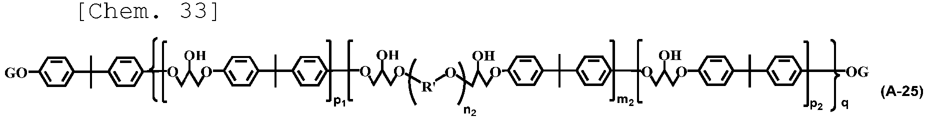

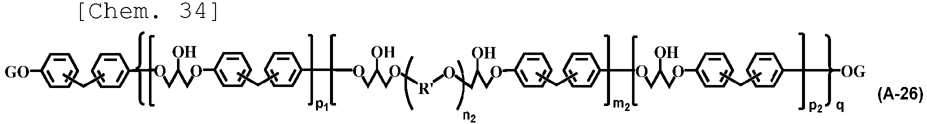

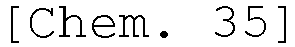

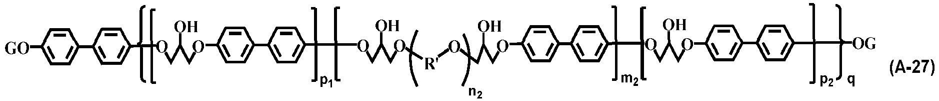

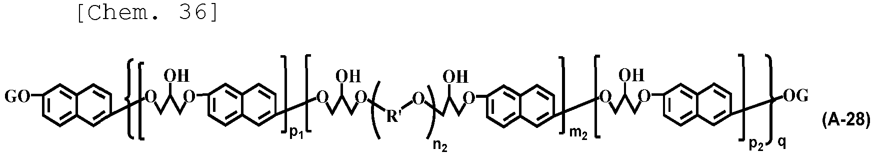

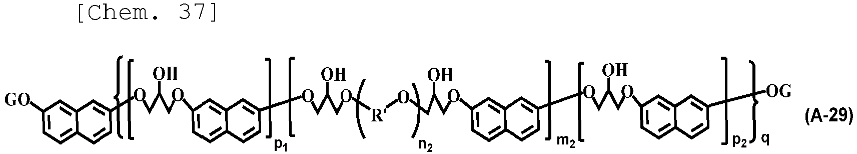

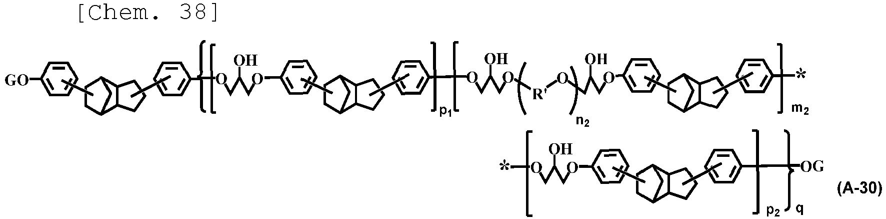

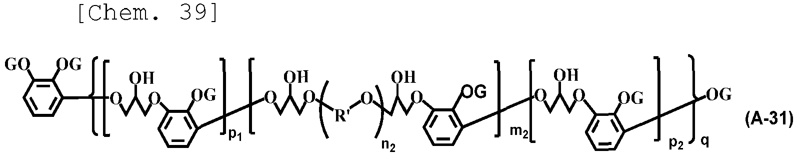

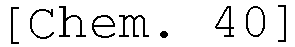

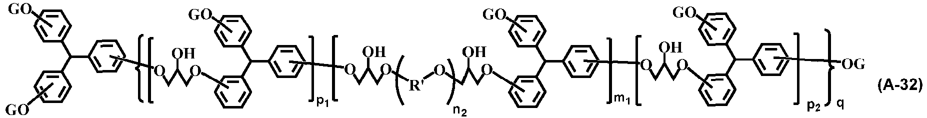

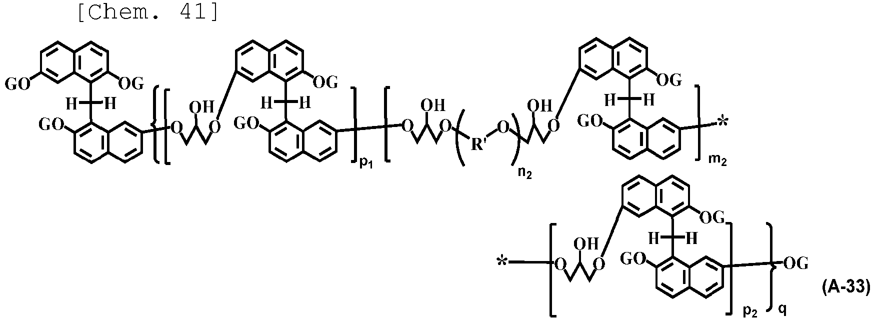

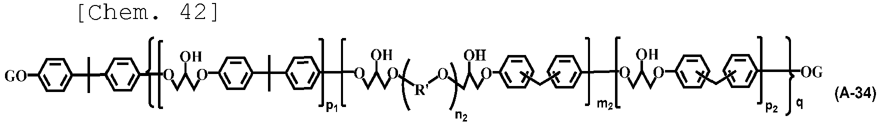

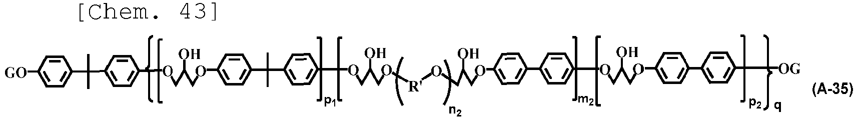

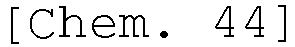

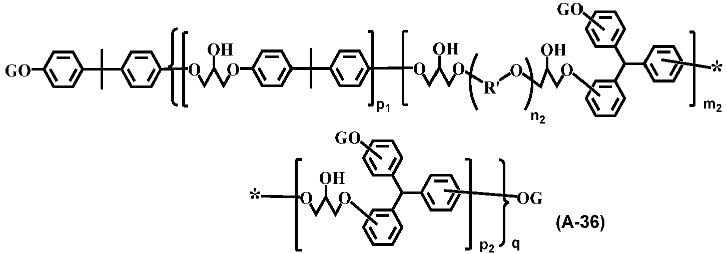

In each of the structural formulae (A-25) to (A-36) above, G is a glycidyl group, R' is a divalent hydrocarbon group having 2 to 12 carbon atoms, n₂ is an average of the number of repeating units, and 2 to 30, m2, p1, p2, and q are an average of the number of repeating units, m2 is 0.5 to 25, each of p1 and p2 is independently 0 to 5, and q is 0.5 to 5. Note that the individual repeating units present in the repeating units of the structure are the same or different.

Of the above structural formulae, from the viewpoint of the obtained cured product which has better balance of physical properties, that represented by the structural formula (A-25), (A-26), (A-27), (A-29), (A-31), (A-32), or (A-33) above is most preferably used.

With respect to the method for producing the epoxy resin (A) for use in the present invention, there is no particular limitation, but from the viewpoint of easy availability of the raw materials and easy reaction, for example, preferred is a method in which a diglycidyl ether (a1) of a dihydroxy compound having an alkylene chain or a polyether chain and an aromatic hydroxy compound (a2) are reacted with each other in such amounts that the molar ratio (a1)/(a2) is in the range of 1/1.01 to 1/5.0 to obtain a hydroxyl compound [corresponding to a precursor or an intermediate of the epoxy resin (A)], which is then reacted with an epihalohydrin (a3).

A product obtained by the reaction to obtain the hydroxy compound by reacting the diglycidyl ether (a1) of a dihydroxy compound having an alkylene chain or a polyether chain and the aromatic hydroxy compound (a2) with each other may contain the unreacted aromatic hydroxy compound (a2), and in the synthesis of the epoxy resin (A) for use in the present invention, the unreacted hydroxy compound (a2) may be used for the reaction with the epihalohydrin (a3) as the next step as it is or removed therefrom. However, from the viewpoint of the balance between the toughness and flexibility of the cured product obtained from the epoxy resin composition of the present invention containing the obtained epoxy resin (A), the content of the unreacted hydroxy compound (a2) present in the hydroxy compound to be used for the next step is preferably in the range of 0.1 to 30% on a mass basis.

A method for removing the unreacted aromatic hydroxy compound (a2) can be conducted in accordance with various types of methods, with no particular limitation. For example, there can be mentioned a column chromatography separation method utilizing a difference of the polarity, a fractional distillation method utilizing a difference of the boiling point, and an alkaline aqueous solution extraction method utilizing a difference of the solubility in an alkaline aqueous solution. Of these, in view of the efficiency and the like, preferred is the alkaline aqueous solution extraction method which causes no thermal change of properties, and, in this method, as an organic solvent used for dissolving an intended material, one which is immiscible with water, such as toluene or methyl isobutyl ketone, can be used, but, from the viewpoint of the dissolving properties for an intended material, methyl isobutyl ketone is preferred.

With respect to the diglycidyl ether (a1) of a dihydroxy compound having an alkylene chain or a polyether chain, there is no particular limitation. Examples of the diglycidyl ether having an alkylene chain include 1,4-butanediol diglycidyl ether, 1,6-hexanediol diglycidyl ether, 1,9-nonanediol diglycidyl ether, 1,11-undecanediol diglycidyl ether, 1,12 dodecanediol diglycidyl ether, 1,13-tridecanediol diglycidyl ether, 1,14-tetradecanediol diglycidyl ether, 1,15-pentadecanediol diglycidyl ether, 1,16-hexadecanediol diglycidyl ether, 2-methyl-1,11-undecanediol diglycidyl ether, 3-methyl-1,11-undecanediol diglycidyl ether, and 2,6,10-trimethyl-1,11-undecanediol diglycidyl ether. Examples of the diglycidyl ether having a polyether chain include polyethylene glycol diglycidyl ether, polypropylene glycol diglycidyl ether, polytetramethylene glycol diglycidyl ether, polypentamethylene glycol diglycidyl ether, polyhexamethylene glycol diglycidyl ether, and polyheptamethylene glycol diglycidyl ether. These diglycidyl ethers may contain an organic chlorine impurity formed during the glycidyl etherification reaction of the hydroxy compound, and may contain an organic chlorine, such as 1-chloromethyl-2-glycidyl ether (chloromethyl compound) represented by the structure below. These diglycidyl ethers may be used individually or in combination.

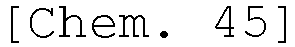

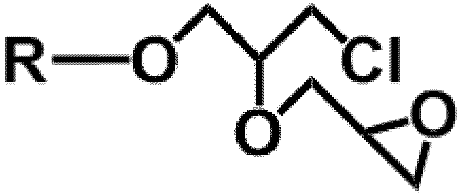

Of these, from the viewpoint of the obtained cured product which has excellent balance between the flexibility and heat resistance, preferably used are 1,4-butanediol diglycidyl ether, 1,6-hexanediol diglycidyl ether, 1,9-nonanediol diglycidyl ether, 1,12-dodecanediol diglycidyl ether, polyethylene glycol diglycidyl ether, polypropylene glycol diglycidyl ether, and polytetramethylene glycol diglycidyl ether.

Further, by reacting the diglycidyl ether having an alkylene chain and the diglycidyl ether having a polyether chain simultaneously with the aromatic hydroxy compound (a2), a hydroxy compound having both the structural unit X and the structural unit Y can be obtained, and by further reacting this with the epihalohydrin (a3), the epoxy resin (A) having both the structural unit X and the structural unit Y can be obtained.

With respect to the aromatic hydroxy compound (a2), there is no particular limitation, and examples of the aromatic hydroxy compounds include dihydroxybenzenes, such as hydroquinone, resorcin, and catechol; trihydroxybenzenes, such as pyrogallol, 1,2,4-trihydroxybenzene, and 1,3,5-trihydroxybenzene; triphenylmethane phenols, such as 4,4',4' '-trihydroxytriphenylmethane; dihydroxynaphthalenes, such as 1,6-dihydroxynaphthalene, 2,7-dihydroxynaphthalene, 1,4-dihydroxynaphthalene, 1,5-dihydroxynaphthalene, 2,3-dihydroxynaphthalene, and 2,6-dihydroxynaphthalene; tetrafunctional phenols obtained by subjecting a dihydroxynaphthalene to coupling reaction, such as 1,1'-methylenebis-(2,7-naphthalenediol), 1,1'-binaphthalene-2,2',7,7'-tetraol, and 1,1'-oxybis-(2,7-naphthalenediol); bisphenols, such as bis(4-hydroxyphenyl)methane, 2,2-bis(4-hydroxyphenyl)propane, 2,2-bis(3-methyl-4-hydroxyphenyl)propane, 1,1-bis(4-hydroxyphenyl)cyclohexane, 1,1-bis(4-hydroxyphenyl)-1-phenylethane, and bis(4-hydroxyphenyl) sulfone; biphenols, such as 2,2'-biphenol, 4,4'-biphenol, (1,1'-biphenyl)-3,4-diol, 3,3'-dimethyl-(1,1'-biphenyl)-4,4'-diol, 3-methyl-(1,1'-biphenyl)-4,4'-diol, 3,3',5,5'-tetramethylbiphenyl-2,2'-diol, 3,3',5,5'-tetramethylbiphenyl-4,4'-diol, 5-methyl-(1,1'-biphenyl)-3,4'-diol, 3'-methyl-(1,1'-biphenyl)-3,4'-diol, and 4'-methyl-(1,1'-biphenyl)-3,4'-diol; alicyclic structure-containing phenols, such as a polyaddition product of phenol and dicyclopentadiene, and a polyaddition product of phenol and a terpene compound; naphthols, such as bis(2-hydroxy-1-naphthyl)methane and bis(2-hydroxy-1-naphthyl)propane; and so-called zylock phenolic resins which are a condensation reaction product of phenol and phenylenedimethyl chloride or biphenylenedimethyl chloride, and these compounds may be used individually or in combination. Further examples include compounds having a structure of the above-mentioned compound having the aromatic nucleus thereof substituted with a methyl group, a t-butyl group, or a halogen atom as a substituent. In the above-mentioned alicyclic structure-containing phenols and zylock phenolic resins, not only a difunctional component but also a tri- or more functional component can be simultaneously present, but, in the invention, the phenols and phenolic resins can be used as such, or only the difunctional component may be used by being extracted through the purification step using a column or the like.

Of these, from the viewpoint of obtaining a cured product having excellent balance between the flexibility and toughness, bisphenols are preferred, and particularly, in view of having remarkable performance of imparting toughness, bis(4-hydroxyphenyl)methane and 2,2-bis(4-hydroxyphenyl) propane are preferred. Further, when a cured product having excellent curing properties or heat resistance is particularly obtained, dihydroxynaphthalenes are preferred, and particularly, in view of having remarkable performance of imparting fast-curing properties, 2,7-dihydroxynaphthalene is preferred. Further, when a cured product having excellent moisture resistance is particularly obtained, a compound having an alicyclic structure is preferably used.

With respect to the reaction ratio of the diglycidyl ether (a1) of a dihydroxy compound having an alkylene chain or a polyether chain and the aromatic hydroxy compound (a2), from the viewpoint of reaction efficiency, they are preferably used with the (a1)/(a2) ratio being 1/1.01 to 1/5.0 (molar ratio), and the (a1)/(a2) ratio is more preferably 1/1.02 to 1/3.0 (molar ratio).

It is preferred that the reaction of the diglycidyl ether (a1) of a dihydroxy compound having an alkylene chain or a polyether chain and the aromatic hydroxy compound (a2) is conducted in the presence of a catalyst. With respect to the catalyst, various types of catalysts can be used, and examples of catalysts include alkaline (earth) metal hydroxides, such as sodium hydroxide, potassium hydroxide, lithium hydroxide, and calcium hydroxide; alkali metal carbonates, such as sodium carbonate and potassium carbonate; phosphorus compounds, such as triphenylphosphine; DMP-30; DMAP; quaternary ammonium salts, such as chloride, bromide, or iodide of tetramethylammonium, tetraethylammonium, tetrabutylammonium, benzyltributylammonium or the like, and chloride, bromide, or iodide of tetramethylphosphonium, tetraethylphosphonium, tetrabutylphosphonium, benzyltributylphosphonium or the like; tertiary amines, such as triethylamine, N,N-dimethylbenzylamine, 1,8-diazabicyclo[5.4.0]undecene, and 1,4-diazabicyclo[2.2.2]octane; and imidazoles, such as 2-ethyl-4-methylimidazole and 2-phenylimidazole. Two or more of these catalysts may be used in combination. Of these, from the viewpoint of causing the reaction to quickly proceed and achieving high effect of reducing the impurity amount, sodium hydroxide, potassium hydroxide, triphenylphosphine, and DMP-30 are preferred. With respect to the amount of the catalyst used, there is no particular limitation, but the catalyst is preferably used in an amount of 0.0001 to 0.1 mol, relative to 1 mol of the aromatic hydroxyl group in the aromatic hydroxy compound (a2). With respect to the form of the catalyst, there is no particular limitation, and the catalyst may be used in the form of an aqueous solution, or may be used in the form of a solid.

Further, the reaction of the diglycidyl ether (a1) of a dihydroxy compound having an alkylene chain or a polyether chain and the aromatic hydroxy compounds (a2) can be conducted without a solvent or in the presence of an organic solvent. Examples of usable organic solvents include methyl cellosolve, ethyl cellosolve, toluene, xylene, methyl isobutyl ketone, dimethyl sulfoxide, propyl alcohol, and butyl alcohol. The amount of the organic solvent used is generally 50 to 300% by mass, preferably 100 to 250% by mass, based on the total mass of the raw materials charged. These organic solvents can be used individually or in combination. For conducting the reaction at high rate, it is preferred that the reaction is conducted without a solvent. On the other hand, from the viewpoint of reducing impurities in the final product, dimethyl sulfoxide is preferably used.

In the above-mentioned reaction, the reaction temperature is generally 50 to 180°C, and the reaction time is generally 1 to 30 hours. From the viewpoint of reducing impurities in the final product, the reaction temperature is preferably 100 to 160°C. Further, when the obtained compound suffers marked coloration, an antioxidant or a reducing agent may be added for suppressing the coloration. With respect to the antioxidant, there is no particular limitation, but examples of antioxidants include hindered phenol compounds, such as a 2,6-dialkylphenol derivative, divalent sulfur compounds, and phosphite compounds containing a trivalent phosphorus atom. With respect to the reducing agent, there is no particular limitation, but examples of reducing agents include hypophosphorous acid, phosphorous acid, thiosulfuric acid, sulfurous acid, a hydrosulfite, and salts thereof.

After completion of the reaction, a neutralization or water washing treatment can be conducted until the pH of the reaction mixture becomes 3 to 7, preferably 5 to 7. The neutralization treatment and water washing treatment may be conducted in accordance with a general method. For example, when a basic catalyst is used, an acid material, such as hydrochloric acid, sodium primary hydrogenphosphate, p-toluenesulfonic acid, or oxalic acid, can be used as a neutralizing agent. After the neutralization or water washing treatment is conducted, if necessary, the solvent is distilled off by heating under a reduced pressure to concentrate the product, obtaining a hydroxy compound.

By using the glycidyl ether having an alkylene chain and the glycidyl ether having a polyether chain in combination, a hydroxy compound having both the structural unit X and the structural unit Y can be obtained, and as examples of preferred structures in this case, there can be mentioned compounds represented by the following structural formulae.

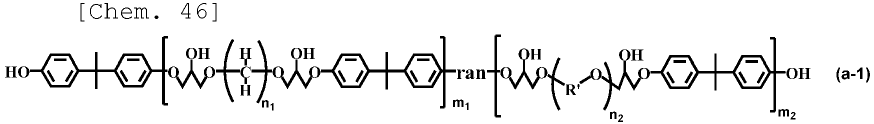

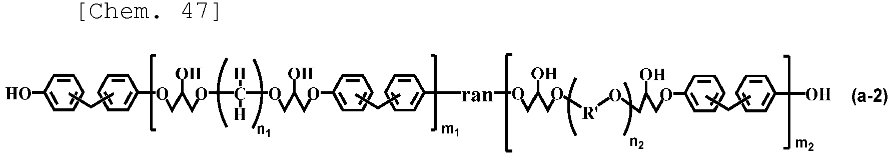

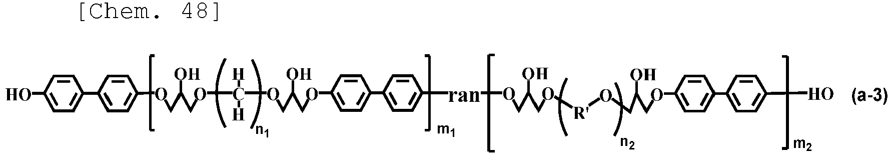

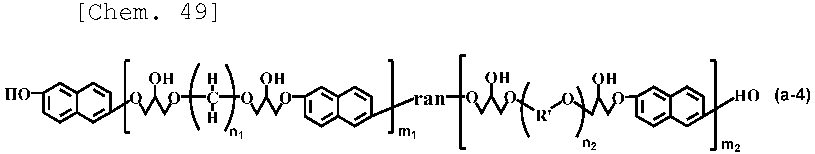

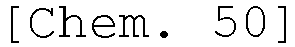

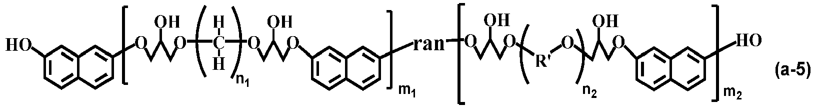

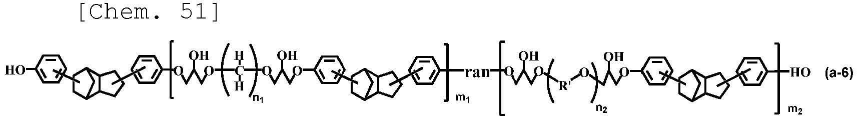

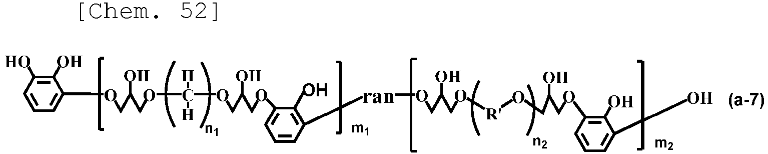

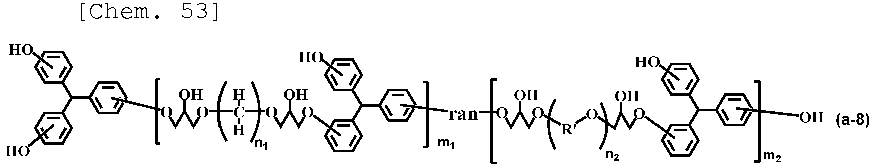

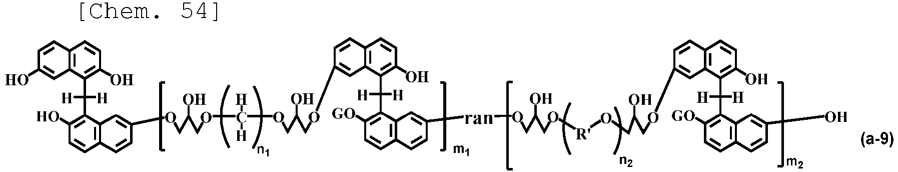

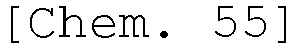

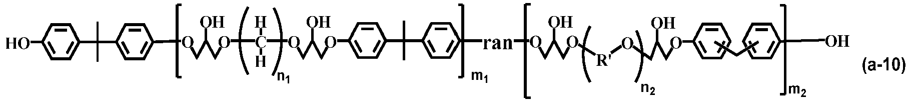

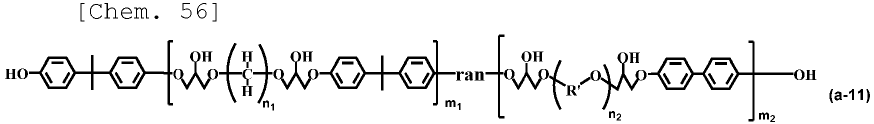

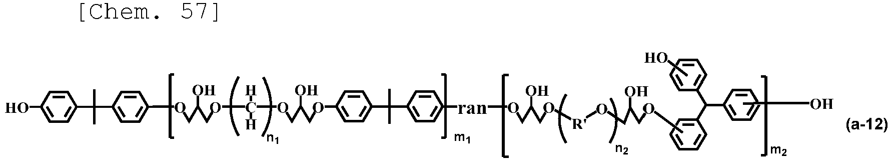

In each of the above structural formulae, ran represents a random bond, R' is a divalent hydrocarbon group having 2 to 12 carbon atoms, n₁ is an integer of 4 to 16, n₂ is an average of the number of repeating units, and 2 to 30, and each of m₁ and m₂ is an average of the number of repeating units, and independently 0.5 to 25. Note that the individual repeating units present in the repeating units of the structure are the same or different.

By using the glycidyl ether having an alkylene chain as a raw material, a hydroxy compound having the structural unit X can be obtained, and as examples of preferred structures in this case, there can be mentioned compounds represented by the following structural formulae.

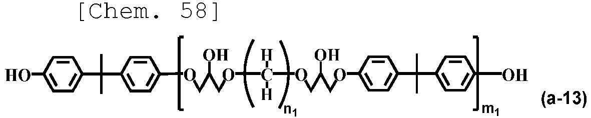

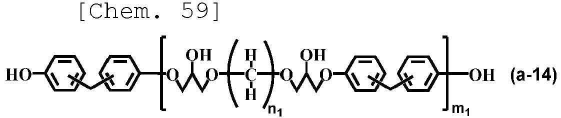

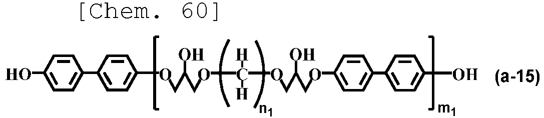

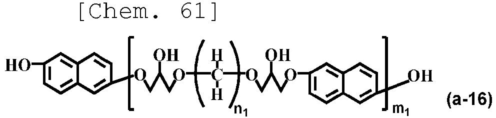

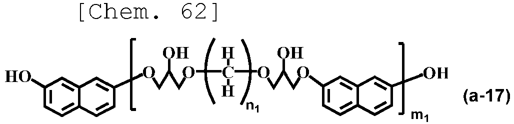

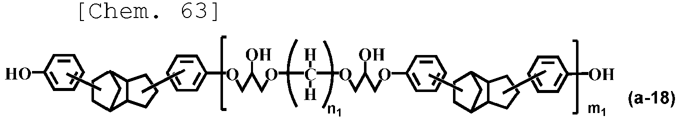

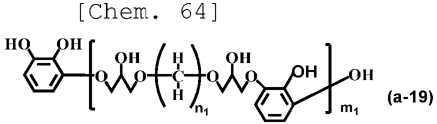

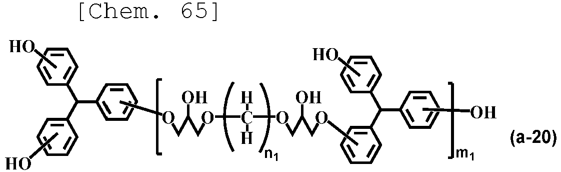

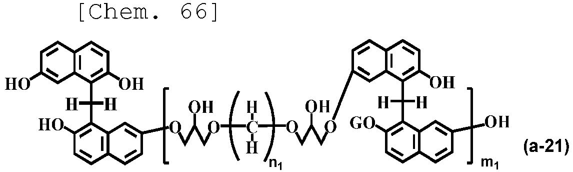

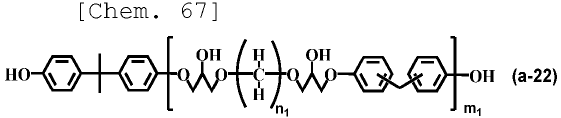

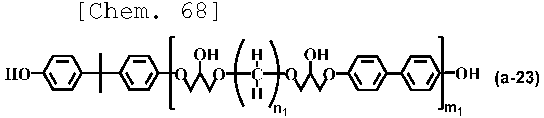

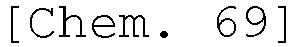

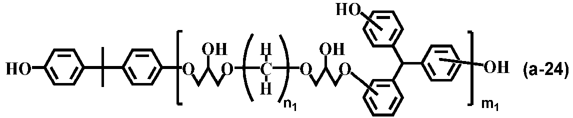

In each of the above structural formulae, n₁ is an integer of 4 to 16 and m₁ is an average of the number of repeating units, and 0.5 to 25.

By using the glycidyl ether having a polyether chain as a raw material, a hydroxy compound having the structural unit Y can be obtained, and as examples of preferred structures in this case, there can be mentioned compounds represented by the following structural formulae.

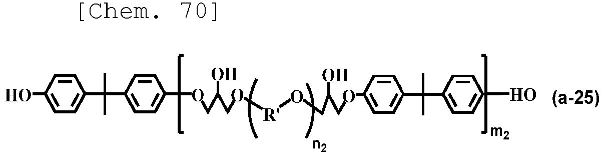

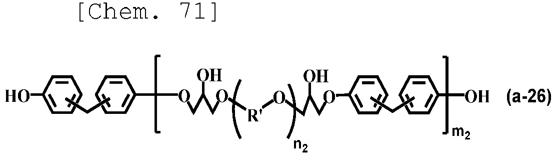

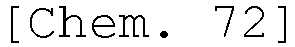

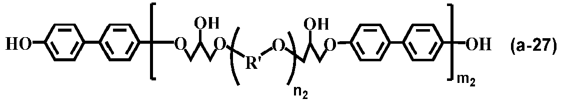

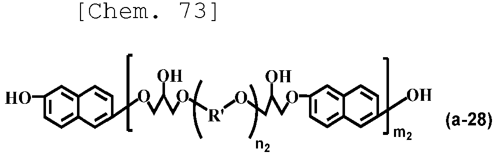

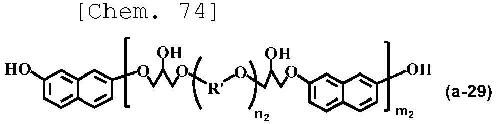

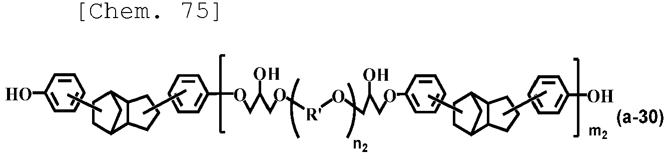

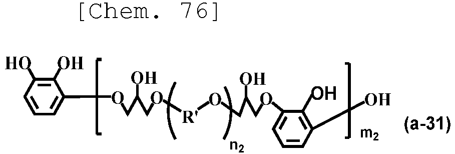

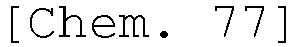

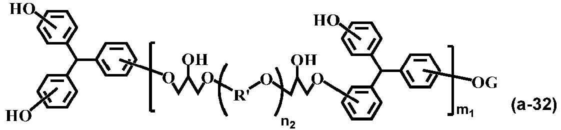

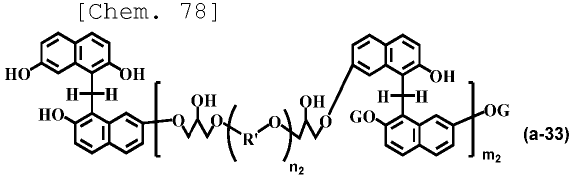

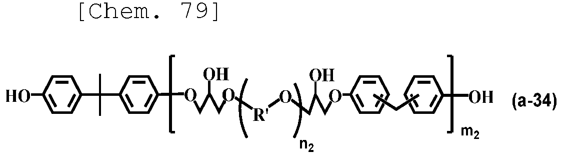

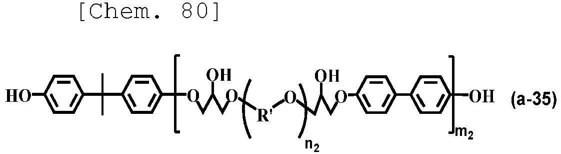

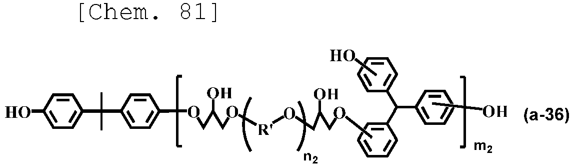

In each of the above structural formulae, R' is a divalent hydrocarbon group having 2 to 12 carbon atoms, n₂ is an average of the number of repeating units, and 2 to 30, and m2 is an average of the number of repeating units, and 0.5 to 25. Note that the individual repeating units present in the repeating units of the structure are the same or different.

In the method for producing the epoxy resin (A), with respect to the method for a glycidyl etherification reaction of the precursor (intermediate) hydroxy compound obtained as mentioned above, there is no particular limitation, and examples include a method in which a phenolic hydroxyl group and the epihalohydrin are reacted with each other, and a method in which a phenolic hydroxyl group is changed to an olefin, and a carbon-carbon double bond of the olefin is oxidized using an oxidizing agent. Of these, a method using the epihalohydrin (a3) is preferred from the viewpoint of easy availability of the raw materials and easy reaction.

As the method using the epihalohydrin (a3), for example, there can be mentioned a method in which the epihalohydrin (a3) is added in an amount of 0.3 to 100 mol, relative to 1 mol of the aromatic hydroxyl group of the hydroxy compound obtained as mentioned above, and, while batchwise or dropwise adding to the resultant mixture a basic catalyst in an amount of 0.9 to 2.0 mol, relative to 1 mol of the aromatic hydroxyl group of the hydroxy compound, a reaction is conducted at a temperature of 20 to 120°C for 0.5 to 10 hours. With respect to the amount of the epihalohydrin (a3) added, as the excess amount of the epihalohydrin (a3) increases, the obtained epoxy resin has a structure that is closer to the theoretical structure, making it possible to suppress the formation of a secondary hydroxyl group caused due to a reaction of the unreacted aromatic hydroxyl group and an epoxy group. From such a point of view, especially, the amount of the epihalohydrin (a3) is preferably in the range of from 2.5 to 100 equivalent. The basic catalyst may be used in the form of a solid or an aqueous solution thereof, and, when used in the form of an aqueous solution, a method may be employed in which, while continuously adding an aqueous solution of the basic catalyst, water and the epihalohydrin (a3) are continuously distilled off from the reaction mixture under a reduced pressure or under atmospheric pressure, and further the resultant distillate is subjected to separation to remove water, and to cause the epihalohydrin (a3) to continuously go back to the reaction mixture.

In the case of performing industrial production, in the production of the epoxy resin, only a virgin epihalohydrin (a3) is used as the epihalohydrin (a3) to be charged in the first batch, but, in the subsequent batches, it is preferred that the epihalohydrin (a3) recovered from the crude reaction product and a virgin epihalohydrin (a3) in an amount corresponding to the amount of the epihalohydrin (a3) consumed by the reaction are used in combination. With respect to the epihalohydrin (a3) used in this instance, there is no particular limitation, but examples include epichlorohydrin and epibromohydrin. Of these, in view of easy availability, epichlorohydrin is preferred.

Further, with respect to the basic catalyst, there is no particular limitation, but examples of basic catalysts include alkaline earth metal hydroxides, alkali metal carbonates, and alkali metal hydroxides. Particularly, from the viewpoint of excellent catalytic activity for the epoxy resin synthesis reaction, alkali metal hydroxides are preferred, and examples include sodium hydroxide and potassium hydroxide. With respect to the use of the above alkali metal hydroxide, the alkali metal hydroxide may be used in the form of an aqueous solution at about 10 to 55% by mass, or may be used in the form of a solid.

Further, by using an organic solvent in the epoxy resin production, it is possible to improve the reaction rate in synthesis of the epoxy resin. With respect to the organic solvent, there is no particular limitation, but examples of such organic solvents include ketones, such as acetone and methyl ethyl ketone; alcohols, such as methanol, ethanol, 1-propyl alcohol, isopropyl alcohol, 1-butanol, secondary-butanol, and tertiary-butanol; cellosolves, such as methyl cellosolve and ethyl cellosolve; ethers, such as tetrahydrofuran, 1,4-dioxane, 1,3-dioxane, and diethoxyethane; and aprotic polar solvents, such as acetonitrile, dimethyl sulfoxide, and dimethylformamide. These organic solvents may be used individually, or in combination for controlling the polarity.

The product of the glycidyl forming reaction is washed with water, and then subjected to distillation while heating under a reduced pressure to distill off the unreacted epihalohydrin (a3) and the organic solvent used. Further, for obtaining an epoxy resin having further reduced a hydrolytic halogen, the obtained epoxy resin can be further subjected to reaction in such a way that the epoxy resin is further dissolved in an organic solvent, such as toluene, methyl isobutyl ketone, or methyl ethyl ketone, and an aqueous solution of an alkali metal hydroxide, such as sodium hydroxide or potassium hydroxide, is added to the resultant solution. In this instance, for the purpose of improving the reaction rate, the reaction may be conducted in the presence of a phase transfer catalyst, such as a quaternary ammonium salt or a crown ether.

When a phase transfer catalyst is used, the amount of the catalyst used is preferably in the range of from 0.1 to 3.0% by mass, based on the mass of the epoxy resin used. After completion of the reaction, the formed salt is removed by filtration, washing with water, and the like, and further a solvent, such as toluene or methyl isobutyl ketone, is distilled off by heating under a reduced pressure, so that a high-purity epoxy resin can be obtained.

In the present invention, from the viewpoint of providing more flexibility and facilitating the expression of easy dismantlability by the thermally expandable particles (C) described below in the cured product obtained by curing the epoxy resin composition, the cured product preferably has a phase separation structure. From this viewpoint, it is characterized in that the epoxy resin (B) having an epoxy equivalent of 100 to 300 g/eq is used in combination with the epoxy resin (A).

The epoxy resin (B) only needs to have an epoxy equivalent in the range of 100 to 300 g/eq and is not limited to its structure. Examples include liquid epoxy resins, such as a bisphenol A epoxy resin, a bisphenol F epoxy resin, a bisphenol S epoxy resin, a bisphenol AD epoxy resin, a polyhydroxybenzene epoxy resin, a polyhydroxynaphthalene epoxy resin, a biphenyl epoxy resin, and a tetramethylbiphenyl epoxy resin, brominated epoxy resins, such as a brominated phenolic novolak epoxy resin, a solid bisphenol A epoxy resin, a phenolic novolak epoxy resin, a cresol novolak epoxy resin, a triphenylmethane epoxy resin, a tetraphenylethane epoxy resin, a dicyclopentadiene-phenol addition reaction epoxy resin, a phenolic aralkyl epoxy resin, a phenylene ether epoxy resin, a naphthylene ether epoxy resin, a naphthol novolak epoxy resin, a naphthol aralkyl epoxy resin, a naphthol-phenol copolycondensed novolak epoxy resin, a naphthol-cresol copolycondensed novolak epoxy resin, an aromatic hydrocarbon formaldehyde resin-modified phenolic resin-type epoxy resin, and a biphenyl-modified novolak epoxy resin, and these epoxy resins may be used individually or in combination, and the epoxy resin is preferably appropriately selected according to the intended use and the physical properties of the cured product and the like.

Of these, among liquid epoxy resins, such as a bisphenol A epoxy resin, a bisphenol F epoxy resin, a bisphenol S epoxy resin, a bisphenol AD epoxy resin, a polyhydroxybenzene epoxy resin, a polyhydroxynaphthalene epoxy resin, a biphenyl epoxy resin, and a tetramethylbiphenyl epoxy resin, an epoxy resin having an epoxy equivalent of 100 to 300 g/eq is preferably used, and, among a bisphenol A epoxy resin, a bisphenol F epoxy resin, a bisphenol S epoxy resin, and a bisphenol AD epoxy resin, an epoxy resin having an epoxy equivalent of 100 to 300 g/eq is especially preferably used.

In the present invention, with respect to the ratio between the epoxy resin (A) and the epoxy resin (B) used, there is no particular limitation, but from the viewpoint of facilitating phase separation in the cured product, the mass ratio (A): (B) between the epoxy resin (A) and the epoxy resin (B) is 97:3 to 3:97, preferably 10:90 to 90:10, and especially preferably 80:20 to 20:80. Phase separation occurring in the cured product results in an "island-in-sea" configuration, and the cured product advantageously has both adhesion properties and stress relaxation ability, exhibits high adhesion in an especially wide region of temperatures, and has an effect of reducing the molding shrinkage of the resin composition before and after cured by heating.

The thermally expandable particles (C) for use in the present invention may be formed of inorganic materials or organic materials. As inorganic materials, for example, there can be mentioned thermally expandable graphite provided in JP-A-2000-44219 and the like. As those formed of organic materials, for example, there can be mentioned thermally expandable microcapsules obtained by microencapsulating, with a thermoplastic polymer used as an outer shell, a volatile expanding agent that becomes gaseous at a temperature not higher than the softening point of the thermoplastic polymer.

Of these, from the viewpoint of superior uniform dispersibility when made into the epoxy resin composition, thermally expandable microcapsules formed of organic materials are preferably used.

The method for producing the thermally expandable microcapsules was provided in the old JP-B-S42-26524, but from the viewpoint of thermally curing the epoxy resin in the present invention, the thermally expandable microcapsules preferably have heat resistance. Methods for producing heat-resistant thermally expandable microcapsules are provided, for example, in WO99/46320, WO99/43758, and JP-A-2002-226620.

Specifically, from the viewpoint that it is preferable for the particles to maintain their shape as particles as they are without thermal expansion when the epoxy resin is thermally cured and to thermally expand at high temperatures by thermal energy after use, the thermally expandable microcapsules are preferably thermally expandable microcapsules with a polymer obtained by polymerizing a nitrile-based monomer and a monomer having a carboxy group as an essential component as an outer shell polymer.

To further impart heat resistance, monomers having an amide group and monomers having a cyclic structure in the side chain are also preferably used.

With respect to the method for obtaining the thermally expandable microcapsules having heat resistance, for example, the outer shell polymer is prepared by blending the above components with a polymerization initiator as appropriate. With respect to the polymerization initiator, known polymerization initiators such as peroxides and azo compounds can be used. Examples include azobisisobutyronitrile, benzoyl peroxide, lauryl peroxide, diisopropyl peroxydicarbonate, t-butyl peroxide, and 2,2'-azobis(2,4-dimethylvaleronitrile). Suitably, oil-soluble polymerization initiators that are soluble in a polymerizable monomer to be used are used. The glass transition temperature (Tg) of the polymer forming the outer shell of the thermally expandable microcapsules is desirably 120°C or higher. The Tg of the polymer can be determined by calculation from the Tg of each homopolymer of the constituent monomers. Further, the Tg of the polymer can also be measured by differential scanning calorimetry (DSC) or the like.

The foaming agent contained in the microcapsules is a substance that becomes gaseous at a temperature not higher than the softening point of the outer shell polymer, and known substances are used. Examples include propane, propylene, butene, normal butane, isobutane, isopentane, neopentane, normal pentane, normal hexane, isohexane, heptane, octane, nonane, decane, petroleum ether, halides of methane, low boiling point liquids such as tetraalkylsilane, and compounds such as AIBN, which thermally decomposes to be gaseous when heated. The foaming agent is selected on demand depending on the temperature range at which the capsules are to be foamed. The foaming agents are used individually or in combination.

Examples also include fluorinated compounds such as HCF, HCFC, HFC, and HFE; commonly known as CFCs, fluorocarbons, and fluoroethers, but their use should be avoided in the current social circumstances due to concerns about ozone layer depletion and global warming and the like. In actual production, conventional methods for producing thermally expandable microcapsules are generally used. That is, inorganic particles such as silica, magnesium hydroxide, calcium phosphate, and aluminum hydroxide are used as dispersion stabilizers in water systems. In addition, used as dispersion stabilizing aids are condensation products of diethanolamine and an aliphatic dicarboxylic acid, polyvinyl pyrrolidone, methylcellulose, polyethylene oxide, polyvinyl alcohol, and various emulsifiers.

The average particle diameter of the thermally expandable particles (C) is 1 to 500 µm, preferably 3 to 100 µm, and more preferably 5 to 50 µm.

The thermally expandable particles (C) may be mixed with the epoxy resin (A) and epoxy resin (B) as they are, or a master batch in which the thermally expandable particles (C) are dispersed in various resins in high concentrations may be used to mix with the epoxy resin (A) and the epoxy resin (B).

As such thermally expandable particles (C), commercially available products can also be used. Examples of commercial available products include Microsphere (product names: F-20D, F-30D, F-40D, FN-100D, FN-100MD, FN-100SD, FN-100SSD, FN-180D, FN-180SD, FN-180SSD, F-190D, and F-260D) manufactured by Matsumoto Yushi-Seiyaku Co., Ltd., Microsphere (product names: H850D, H880D, S2340D, and S2640D) manufactured by Kureha Corporation, Thermally Expandable Graphite (product names: 50LTE-U, MZ-260, CA-60, SS-3, and SS-3LA) manufactured by Air Water Inc. It is preferable to select as appropriate particles that do not thermally expand at the curing temperature of the epoxy resin composition but thermally expand at a heating temperature during dismantling.

With respect to the ratio of the thermally expandable particles (C) used, from the viewpoint of expressing the effect of sufficiently expanding during dismantling after use to reduce adhesion properties without damaging adhesion properties when the epoxy resin composition of the present invention is cured and the flexibility of the cured product, the thermally expandable particles (C) are preferably used in the range of 3 to 40 parts by mass and especially preferably used in the range of 5 to 30 parts by mass relative to 100 parts by mass of a total of the epoxy resin (A) and the epoxy resin (B).

The epoxy resin composition of the present invention preferably further contains a curing agent (D) capable of reacting with common epoxy resins.

With respect to the curing agents (D), there is no particular limitation, and examples include amine compounds, acid anhydrides, amide compounds, phenolic hydroxyl group-containing compounds, carboxylic acid compounds, and the hydroxy compound as the precursor of the epoxy resin (A).

Examples of the amine compounds include aliphatic amine compounds such as trimethylenediamine, ethylenediamine, N,N,N',N'-tetramethylethylenediamine, pentamethyldiethylenetriamine, triethylenediamine, dipropylenediamine, N,N,N',N'-tetramethylpropylenediamine, tetramethylenediamine, pentanediamine, hexamethylenediamine, trimethylhexamethylenediamine, N,N,N',N'-tetramethylhexamethylenediamine, N,N-dimethylcyclohexylamine, diethylenetriamine, triethylenetetramine, tetraethylenepentamine, dimethylaminopropylamine, diethylaminopropylamine, dibutylaminopropylamine, 1,4-diazabicyclo[2,2,2]octane(triethylenediamine), polyoxyethylenediamine, polyoxypropylenediamine, bis(2-dimethylaminoethyl) ether, dimethylaminoethoxy ethoxyethanol, triethanolamine, and dimethylaminohexanol;
alicyclic and heterocyclic amine compounds such as piperidine, piperazine, menthanediamine, isophoronediamine, methylmorpholine, ethylmorpholine, N,N',N''-tris(dimethylaminopropyl)hexahydro-s-triazine, a 3,9-bis(3-aminopropyl)-2,4,8,10-tetraoxaspiro[5,5]undecane adduct, N-aminoethylpiperazine, trimethylaminoethylpiperazine, bis(4-aminocyclohexyl)methane, N,N'-dimethylpiperazine, and 1,8-diazabicyclo-[5.4.0]-undecene (DBU);
aromatic amine compounds such as o-phenylenediamine, m-phenylenediamine, p-phenylenediamine, diaminodiphenylmethane, diaminodiphenyl sulfone, benzyldimethylamine, dimethylbenzylamine, m-xylenediamine, pyridine, picoline, and α-methylbenzylmethylamine; and
modified amine compounds such as an epoxy compound-added polyamine, a polyamine obtained by Michael addition, a polyamine obtained by Mannich addition, a thiourea-added polyamine, a ketone-capped polyamine, dicyandiamide, guanidine, an organic acid hydrazide, diaminomaleonitrile, amineimide, a boron trifluoride-piperidine complex, and a boron trifluoride-monoethylamine complex.

Examples of the acid anhydrides include phthalic anhydride, trimellitic anhydride, pyromellitic anhydride, maleic anhydride, maleic anhydride polypropylene glycol, tetrahydrophthalic anhydride, methyltetrahydrophthalic anhydride, methyl nadic anhydride, hexahydrophthalic anhydride, and methylhexahydrophthalic anhydride.

Examples of the phenolic hydroxyl group-containing compounds include bisphenols such as bis(4-hydroxyphenyl)methane, 2,2-bis(4-hydroxyphenyl)propane, 2,2-bis(3-methyl-4-hydroxyphenyl)propane, 1,1-bis(4-hydroxyphenyl)cyclohexane, 1,1-bis(4-hydroxyphenyl)-1-phenylethane, and bis(4-hydroxyphenyl)sulfone; polyhydric phenol compounds such as a phenolic novolak resin, a cresol novolak resin, an aromatic hydrocarbon formaldehyde resin-modified phenolic resin, a dicyclopentadiene phenol-added resin, a phenol aralkyl resin (zylock resin), a naphthol aralkyl resin, a trimethylolmethane resin, a tetraphenylolethane resin, a naphthol novolak resin, a naphthol-phenol copolycondensed novolak resin, a naphthol-cresol copolycondensed novolak resin, a biphenyl-modified phenolic resin (a polyhydric phenol compound having a phenolic nucleus linked through a bismethylene group), a biphenyl-modified naphthol resin (a polyhydric naphthol compound having a phenolic nucleus linked through a bismethylene group), an aminotriazine-modified phenolic resin (a polyhydric phenol compound having a phenolic nucleus linked through melamine, benzoguanamine, or the like), and an alkoxy group-containing aromatic ring-modified novolak resin (a polyhydric phenol compound in which a phenolic nucleus and an alkoxy group-containing aromatic ring are linked through formaldehyde).

Examples of the amide compounds include dicyandiamide and polyamidoamines. Examples of the polyamidoamines include polyamidoamines obtained by a reaction of an aliphatic dicarboxylic acid such as succinic acid, glutaric acid, adipic acid, pimelic acid, suberic acid, or azelaic acid, or a carboxylic acid compound such as a fatty acid or a dimer acid with an aliphatic polyamine or a polyamine having a polyoxyalkylene chain.

Examples of the carboxylic acid compounds include carboxylic acid polymers, such as a carboxylic acid-end polyester, polyacrylic acid, and maleic acid-modified polypropylene glycol.

When the above curing agent is used, a single type of the curing agent may be used, or two or more types of the curing agents may be used in combination. In the use as an underfill or the like or in the use as a general coating composition, the above-mentioned amine compound, carboxylic acid compound, and/or acid anhydride compound is preferably used. Further, in the use as a bonding agent or a flexible wiring board, the amine compound, particularly, dicyandiamide is preferred from the viewpoint of the operation properties, curing properties, and long-term stability. Further, in the use as a semiconductor encapsulating material, from the viewpoint of the heat resistance of the cured product, a phenol compound of a solid type is preferred.

Further, the epoxy resin composition of the invention may contain a curing accelerator. With respect to the curing accelerator, those of various types can be used, but examples include a urea compound, a phosphorus compound, a tertiary amine, an imidazole, an organic acid metal salt, a Lewis acid, and an amine complex salt. When used as a bonding agent, from the viewpoint of excellent operation properties and cold curing properties, a urea compound, especially 3-(3,4-dichlorophenyl)-1,1-dimethylurea (DCMU) is preferred. When used as a semiconductor encapsulating material, from the viewpoint of excellent curing properties, heat resistance, electric properties, moisture resistance reliability and the like, triphenylphosphine is preferred as a phosphorus compound, and 1,8-diazabicyclo-[5.4.0]-undecene is preferred as a tertiary amine.

Examples of the phosphorus compound include alkyl phosphines such as ethylphosphine and butylphosphine, primary phosphines such as phenylphosphine; dialkyl phosphines such as dimethylphosphine and dipropylphosphine; secondary phosphines such as diphenylphosphine and methylethylphosphine; and tertiary phosphines such as trimethylphosphine, triethylphosphine, and triphenylphosphine.

Examples of the imidazole include imidazole, 1-methylimidazole, 2-methylimidazole, 3-methylimidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, a 2-phenylimidazole isocyanuric acid adduct, a 2-methylimidazole isocyanuric acid adduct, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole, 1-dodecyl-2-methyl-3-benzylimidazolium chloride, and 1-benzyl-2-phenylimidazole hydrochloride.

Examples of the imidazoline compounds include 2-methylimidazoline and 2-phenylimidazoline.

Examples of the urea compounds include p-chlorophenyl-N,N-dimethyl urea, 3-phenyl-1,1-dimethyl urea, 3-(3,4-dichlorophenyl)-N,N-dimethyl urea, and N-(3-chloro-4-methylphenyl)-N',N'-dimethyl urea.

In the epoxy resin composition of the present invention, an epoxy resin other than the epoxy resin (A) and the epoxy resin (B) may be used in such an amount that the effects of the present invention are not sacrificed. In this case, in the epoxy resin composition of the invention, the total amount of the epoxy resin (A) and the epoxy resin (B) in the whole of the epoxy resins is preferably 30% by mass or more, especially preferably 40% by mass or more.

The epoxy resin usable in combination is not limited as long as it is other than the epoxy resin (A) and the epoxy resin (B), and examples of such epoxy resins include liquid epoxy resins, such as a bisphenol A epoxy resin, a bisphenol F epoxy resin, a bisphenol S epoxy resin, a bisphenol AD epoxy resin, a polyhydroxybenzene epoxy resin, a polyhydroxynaphthalene epoxy resin, a biphenyl epoxy resin, and a tetramethylbiphenyl epoxy resin, brominated epoxy resins, such as a brominated phenolic novolak epoxy resin, and a solid bisphenol A epoxy resin, a phenolic novolak epoxy resin, a cresol novolak epoxy resin, a triphenylmethane epoxy resin, a tetraphenylethane epoxy resin, a dicyclopentadiene-phenol addition reaction epoxy resin, a phenolic aralkyl epoxy resin, a phenylene ether epoxy resin, a naphthylene ether epoxy resin, a naphthol novolak epoxy resin, a naphthol aralkyl epoxy resin, a naphthol-phenol copolycondensed novolak epoxy resin, a naphthol-cresol copolycondensed novolak epoxy resin, an aromatic hydrocarbon formaldehyde resin-modified phenolic resin-type epoxy resin, and a biphenyl-modified novolak epoxy resin, and these epoxy resins may be used individually or in combination, and the epoxy resin is preferably appropriately selected according to the intended use and the physical properties of the cured product and the like.

With respect to the amounts of the epoxy resin and the curing agent used in the epoxy resin composition of the present invention, there is no particular limitation, but, from the viewpoint of the obtained cured product which has excellent mechanical physical properties and the like, the epoxy resin and the curing agent are preferably incorporated in such amounts that the amount of the active group in the curing agent is 0.4 to 1.5 equivalent, relative to 1 equivalent of the total of the epoxy group in the epoxy resin composition.

The epoxy resin composition of the present invention may further contain a filler other than the thermally expandable particles (C). Examples of fillers include inorganic fillers and organic fillers. Examples of inorganic fillers include inorganic fine particles.

With respect to the inorganic fine particles, examples of those having excellent heat resistance include alumina, magnesia, titania, zirconia, and silica (such as quartz, fumed silica, precipitated silica, silicic anhydride, fused silica, crystalline silica, and micronized amorphous silica); examples of those having excellent thermal conductivity include boron nitride, aluminum nitride, alumina oxide, titanium oxide, magnesium oxide, zinc oxide, silicon oxide, and diamond; examples of those having excellent electrical conductivity include a metallic filler and/or a metal-coated filler using a metal simple substance or alloy (for example, iron, copper, magnesium, aluminum, gold, silver, platinum, zinc, manganese, or stainless steel); examples of those having excellent barrier properties include minerals, such as mica, clay, kaolin, talc, zeolite, wollastonite, and smectite, potassium titanate, magnesium sulfate, sepiolite, xonotlite, aluminum borate, calcium carbonate, titanium oxide, barium sulfate, zinc oxide, and magnesium hydroxide; examples of those having a high refractive index include barium titanate, zirconia oxide, and titanium oxide; examples of those having photocatalytic properties include photocatalyst metals, such as titanium, cerium, zinc, copper, aluminum, tin, indium, phosphorus, carbon, sulfur, ruthenium, nickel, iron, cobalt, silver, molybdenum, strontium, chromium, barium, and lead, composites of the above metals, and oxides thereof; examples of those having excellent abrasion resistance include metals, and composites and oxides thereof, such as silica, alumina, zirconia, and magnesium oxide; examples of those having excellent electrical conductivity include metals, such as silver and copper, tin oxide, and indium oxide; examples of those having excellent insulation properties include silica; and examples of those having excellent ultraviolet light screening properties include titanium oxide and zinc oxide. These inorganic fine particles may be appropriately selected according to the use, and a single type of the inorganic fine particles may be used, or two or more types of the inorganic fine particles may be used in combination. Further, the inorganic fine particles have various properties other than the properties mentioned above, and therefore may be appropriately selected according to the use.

For example, when silica is used as the inorganic fine particles, there is no particular limitation with respect to the silica, and known silica fine particles, such as silica in a powder form or colloidal silica, can be used. Examples of commercially available silica fine particles in a powder form include Aerosil 50, 200, manufactured by Nippon Aerosil Co., Ltd.; Sildex H31, H32, H51, H52, H121, H122, manufactured by AGC Inc.; E220A, E220, manufactured by Nippon Silica Industrial Co.; SYLYSIA 470, manufactured by Fuji Silysia Chemical Ltd.; and SG Flake, manufactured by Nippon Sheet Glass Co., Ltd.

Further, examples of commercially available colloidal silica include methanol silica sol, IPA-ST, MEK-ST, NBA-ST, XBA-ST, DMAC-ST, ST-UP, ST-OUP, ST-20, ST-40, ST-C, ST-N, ST-O, ST-50, ST-OL, manufactured by Nissan Chemical Industries, Ltd.

Surface-modified silica fine particles may be used, and, as examples of such silica fine particles, there can be mentioned those which are obtained by subjecting the above-mentioned silica fine particles to surface treatment with a reactive silane coupling agent having a hydrophobic group, and those which are obtained by modifying the silica fine particles with a compound having (a)an (meth)acryloyl group. Examples of commercially available powder-form silica modified with a compound having (a)an (meth)acryloyl group include Aerosil RM50, R711, manufactured by Nippon Aerosil Co., Ltd., and examples of commercially available colloidal silica modified with a compound having (a)an (meth)acryloyl group include MIBK-SD, manufactured by Nissan Chemical Industries, Ltd.

With respect to the shape of the silica fine particles, there is no particular limitation, and those in a spherical, hollow, porous, rod, plate, fibrous, or indefinite shape can be used. Further, the primary particle diameter of the silica fine particles is preferably in the range of from 5 to 200 nm.

With respect to the titanium oxide fine particles, not only a loading pigment but also an ultraviolet light responsive photocatalyst can be used, for example, anatase titanium oxide, rutile titanium oxide, brookite titanium oxide, or the like can be used. Further, there can be used titanium oxide particles which are designed to be responsive to a visible light by doping the crystal structure of titanium oxide with a different element. With respect to the element with which titanium oxide is doped, an anionic element, such as nitrogen, sulfur, carbon, fluorine, or phosphorus, or a cationic element, such as chromium, iron, cobalt, or manganese, is preferably used. Further, with respect to the form of the titanium oxide fine particles, those in the form of a powder, or in the form of a sol or slurry having the particles dispersed in an organic solvent or water can be used. Examples of commercially available titanium oxide fine particles in a powder form include Aerosil P-25, manufactured by Nippon Aerosil Co., Ltd., and ATM-100, manufactured by Tayca Corporation. Further, examples of commercially available titanium oxide fine particles in a slurry form include TKD-701, manufactured by Tayca Corporation.

The epoxy resin composition of the invention may further contain a fibrous substrate. With respect to the fibrous substrate, there is no particular limitation, but preferred is one which is for use in a fiber-reinforced resin, and examples include inorganic fibers and organic fibers.

Examples of inorganic fibers include inorganic fibers, such as a carbon fiber, a glass fiber, a boron fiber, an alumina fiber, and a silicon carbide fiber, a carbon fiber, an activated carbon fiber, a graphite fiber, a tungsten carbide fiber, a silicon carbide fiber (silicon carbide fiber), a ceramic fiber, a natural fiber, a mineral fiber of basalt or the like, a boron nitride fiber, a boron carbide fiber, and a metallic fiber. Examples of the metallic fibers include an aluminum fiber, a copper fiber, a brass fiber, a stainless steel fiber, and a steel fiber.

Examples of organic fibers include synthetic fibers formed from a resin material, such as polybenzazole, aramid, PBO (polyparaphenylenebenzoxazole), polyphenylene sulfide, polyester, acryl, polyamide, polyolefin, polyvinyl alcohol, or polyarylate, natural fibers of cellulose, pulp, cotton, wool, or silk, and regenerated fibers of protein, polypeptide, alginic acid, or the like.

Of these, a carbon fiber and a glass fiber are preferred because they have a wide range of industrial applicability. Among these fibers, a single type of the fiber may be used, or two or more types of the fibers may be used in combination.

The fibrous substrate may be an aggregate of fibers, and the fiber may be continuous or discontinuous, and may be in a woven fabric form or a nonwoven fabric form. Further, the fibrous substrate may be a fiber bundle having fibers unidirectionally aligned, and may have a sheet form in which fiber bundles are arranged. Further, the fibrous substrate may have a steric form of a fiber aggregate having an increased thickness.

In the epoxy resin composition of the invention, for the purpose of controlling the solid content or viscosity of the resin composition, a dispersing medium may be used. With respect to the dispersing medium, any liquid medium which does not adversely affect the effects of the invention can be used, and examples of such liquid media include various organic solvents and liquid organic polymers.

Examples of the organic solvents include ketones, such as acetone, methyl ethyl ketone (MEK), and methyl isobutyl ketone (MIBK); cyclic ethers, such as tetrahydrofuran (THF) and dioxolane; esters, such as methyl acetate, ethyl acetate, and butyl acetate; aromatic solvents, such as toluene and xylene; and alcohols, such as carbitol, cellosolve, methanol, isopropanol, butanol, and propylene glycol monomethyl ether, and these can be used individually or in combination, and, of these, methyl ethyl ketone is preferred from the viewpoint of the volatility during the application and the recovery of the solvent.

The above-mentioned liquid organic polymer is a liquid organic polymer which does not directly contribute to the curing reaction, and examples of such polymers include a carboxyl group-containing polymer modification product (FLOWLEN G-900, NC-500: Kyoeisha Chemical Co., Ltd.), an acrylic polymer (FLOWLEN WK-20: Kyoeisha Chemical Co., Ltd.), an amine salt of a special modified phosphate (HIPLAAD ED-251: Kusumoto Chemicals Ltd.), and a modified acrylic block copolymer (DISPERBYK2000; BYK-Chemie GmbH).

Further, the resin composition of the invention may have a resin other than the various compounds mentioned above in the invention. With respect to the resin, any known resin commonly used may be incorporated into the composition as long as the effects of the invention are not sacrificed, and, for example, a thermosetting resin or a thermoplastic resin can be used.

The thermosetting resin means a resin having properties that it can be changed to be substantially insoluble and infusible upon being cured by a means, such as heating, radiation, or a catalyst. Specific examples of thermosetting resins include a phenolic resin, a urea resin, a melamine resin, a benzoguanamine resin, an alkyd resin, an unsaturated polyester resin, a vinyl ester resin, a diallyl terephthalate resin, a silicone resin, a urethane resin, a furan resin, a ketone resin, a xylene resin, a thermosetting polyimide resin, a benzoxazine resin, an active ester resin, an aniline resin, a cyanate ester resin, a styrene-maleic anhydride (SMA) resin, and a maleimide resin. These thermosetting resins may be used individually or in combination.

The thermoplastic resin means a resin which can be melt-molded by heating. Specific examples of thermoplastic resins include a polyethylene resin, a polypropylene resin, a polystyrene resin, a rubber modified polystyrene resin, an acrylonitrile-butadiene-styrene (ABS) resin, an acrylonitrile-styrene (AS) resin, a polymethyl methacrylate resin, an acrylic resin, a polyvinyl chloride resin, a polyvinylidene chloride resin, a polyethylene terephthalate resin, an ethylene vinyl alcohol resin, a cellulose acetate resin, an ionomer resin, a polyacrylonitrile resin, a polyamide resin, a polyacetal resin, a polybutylene terephthalate resin, a polylactic acid resin, a polyphenylene ether resin, a modified polyphenylene ether resin, a polycarbonate resin, a polysulfone resin, a polyphenylene sulfide resin, a polyether imide resin, a polyether sulfone resin, a polyarylate resin, a thermoplastic polyimide resin, a polyamide-imide resin, a polyether ether ketone resin, a polyketone resin, a liquid crystalline polyester resin, a fluororesin, a syndiotactic polystyrene resin, and a cyclic polyolefin resin. These thermoplastic resins can be used individually or in combination.

The resin composition of the invention may have another ingredient. Examples of such ingredients include a catalyst, a polymerization initiator, an inorganic pigment, an organic pigment, a loading pigment, a clay mineral, a wax, a surfactant, a stabilizer, a flow modifier, a coupling agent, a dye, a leveling agent, a rheology control agent, an ultraviolet light absorber, an antioxidant, a flame retardant, a plasticizer, and a reactive diluent.

By curing the resin composition of the invention, a cured product can be obtained. When curing the resin composition, the resin composition may be cured at ordinary room temperature or by heating. When heat-curing is conducted, the resin composition may be cured by heating one time, or may be cured through multiple heating steps.

Further, the epoxy resin composition of the invention can be cured by an active energy ray. In this case, as a polymerization initiator, a photocationic polymerization initiator may be used. As an active energy ray, a visible light, an ultraviolet light, an X-ray, an electron beam, or the like can be used.

Examples of photocationic polymerization initiators include arylsulfonium salts and aryliodonium salts, and specifically, an arylsulfonium hexafluorophosphate, an arylsulfonium hexafluoroantimonate, an arylsulfonium tetrakis(pentafluoro)borate, a tri(alkylphenyl)sulfonium hexafluorophosphate, or the like can be used. Photocationic polymerization initiators may be used individually or in combination.

In the epoxy resin composition of the present invention, the components described above only need to be uniformly mixed together, and there is no particular limitation as to the method. The epoxy resin composition of the present invention can be prepared by mixing them together using, for example, a pot mill, a ball mill, a bead mill, a roll mill, a homogenizer, a super mill, a homodisper, a utility mixer, a Banbury mixer, a kneader, or the like.

The cured product of the present invention is obtained by curing the epoxy resin composition described above, and the curing conditions can be selected in various ways depending on the types of the curing agent and the curing accelerator and other factors. The curing conditions are similar to the curing conditions for known epoxy resin compositions, and no special method is required. The obtained cured product can be laminated on a substrate to obtain a laminate. As a substrate for the laminate, an inorganic material, such as a metal or glass, or an organic material, such as a plastic or wood, may be appropriately selected according to the use of the laminate. With respect to the form of the laminate, the laminate may have a flat plate form, a sheet form, or a three-dimensional structure or a steric form. The laminate may have an arbitrary form according to the purpose, such as a form having curvature in the entire surface or part thereof. Further, with respect to the hardness, thickness and the like of the substrate, there is no limitation. Further, the cured product of the invention may be further laminated on the cured product of the invention which is used as a substrate.

Further, the laminate may be a multilayer laminate obtained by laminating a first substrate, a layer of the cured product of the resin composition, and a second substrate in this order. The resin composition of the invention has excellent adhesion properties, and therefore can be advantageously used as a bonding agent for bonding the first substrate and the second substrate.

The resin composition of the invention has especially high adhesion properties to a metal and/or a metal oxide, and therefore can be particularly advantageously used as a primer for metal. Examples of metals include copper, aluminum, gold, silver, iron, platinum, chromium, nickel, tin, titanium, zinc, various alloys, and composite materials thereof, and examples of metal oxides include a single oxide and/or a composite oxide of the above metals. The resin composition has especially excellent adhesive force to iron, copper, and aluminum, and therefore can be advantageously used as a bonding agent for iron, copper, and aluminum.

Further, the resin composition of the invention can relax stress, and hence can be particularly advantageously used in bonding different materials. For example, even in a laminate having different materials such that the first substrate is a metal and/or a metal oxide and the second substrate is a plastic layer, the adhesive force can be maintained due to the stress relaxation ability of the resin composition.

In the laminate of the invention, a layer of the cured product may be formed by directly applying or directly molding the resin composition onto the substrate, or a molded layer of the resin composition may be laminated on the substrate. When directly applying the resin composition to the substrate, with respect to the method for application, there is no particular limitation, and examples of application methods include a spraying method, a spin coating method, a dipping method, a roll coating method, a blade coating method, a doctor roll method, a doctor blade method, a curtain coating method, a slit coating method, a screen printing method, and an ink-jet method. When directly molding the resin composition onto the substrate, examples of molding methods include in-mold molding, insert molding, vacuum molding, extrusion lamination, and press molding.

When the molded layer of the resin composition is laminated on the substrate, the lamination may be conducted in such a way that a layer of the uncured or semi-cured resin composition is laminated on the substrate and then cured, or in such a way that a layer of the cured product obtained by completely curing the composition is laminated on the substrate.

Further, lamination may be conducted by applying a precursor which can be a substrate to the cured product of the invention and curing the precursor, or a precursor which can be a substrate or the composition of the invention which is in an uncured or semi-cured state is bonded to the cured product and then cured. With respect to the precursor which can be a substrate, there is no particular limitation, and examples of such precursors include various types of curable resin compositions.

When the resin composition of the invention has a fibrous substrate wherein the fibrous substrate is a reinforcing fiber, the composition containing the fibrous substrate can be used as a fiber-reinforced resin.

With respect to the method for permitting the composition to contain the fibrous substrate, there is no particular limitation as long as the effects of the present invention are not sacrificed, and there can be mentioned a method in which a composite of the fibrous substrate and the composition is formed by a kneading, application, impregnation, injection, or contact bonding method or the like, and the method can be appropriately selected according to the form of the fiber and the use of the fiber-reinforced resin.

With respect to the method for molding the fiber-reinforced resin in the invention, there is no particular limitation. When a product in a plate form is produced, an extrusion molding method is generally used, but the product can be produced by flat press. In addition, an extrusion molding method, a blow molding method, a compression molding method, a vacuum molding method, an injection molding method, or the like can be used. Further, when a product in a film form is produced, a melt extrusion method or a solution casting method can be used, and, when using a melt-molding method, examples include inflation film molding, cast molding, extrusion lamination molding, calender molding, sheet molding, fiber molding, blow molding, injection molding, rotary molding, and cover molding. Further, in the case of the resin curable by an active energy ray, a cured product can be produced by various curing methods using an active energy ray. Particularly, when a thermosetting resin is used as a main component of a matrix resin, there can be mentioned a molding method in which a prepreg is formed from the molding material and heated under pressure by a press or an autoclave, and further examples include RTM (Resin Transfer Molding), VaRTM (Vacuum assist Resin Transfer Molding), lamination molding, and hand lay-up molding.

The fiber-reinforced resin in the invention can form a state which is called a prepreg that is uncured or semi-cured. A product in the state of prepreg may be distributed, and then finally cured to form a cured product. When forming a laminate, a prepreg is advantageous in that a prepreg is formed and subsequently other layers are laminated on the prepreg, and then finally cured, making it possible to form a laminate having the layers closely bonded to each other.

With respect to the mass ratio of the composition and fibrous substrate used in the prepreg, there is no particular limitation, but, generally, it is preferred that the prepreg is prepared so that the resin content of the prepreg is 20 to 60% by mass.

The resin composition of the invention is advantageous in that a cured product obtained from the resin composition has excellent adhesion to a substrate, and therefore can be especially advantageously used in electronic members. Particularly, the resin composition can be advantageously used in a semiconductor encapsulating material, a circuit board, a buildup film, a buildup substrate, a bonding agent, and a resist material. Further, the resin composition can be advantageously used in a matrix resin for a fiber-reinforced resin, and is particularly suitable for a high heat-resistant prepreg. The heat-resistant members and electronic members obtained from the resin composition can be advantageously used in various applications, and examples include industrial mechanical parts, general mechanical parts, parts for automobile, railway rolling stock and vehicles, aerospace and aircraft related parts, electronic and electric parts, building materials, container and packaging members, articles for daily use, sports and leisure goods, and housing members for wind power generation, but the use is not limited to these.

In particular, the resin composition can be suitably used as a bonding agent for a structural member in the fields of automobiles, electric trans, civil engineering and construction, electronics, airplanes, and aerospace industry by using characteristics including excellent softness of a cured product. For example, even when a bonding agent of the present invention is used in adhesion between different materials such as a metal and a non-metal, high adhesion properties can be maintained without being affected by a change of temperature environment, and peeling is unlikely to occur. The bonding agent of the present invention can be used as a bonding agent for general office use, a medical bonding agent, a bonding agent for carbon fibers, or a bonding agent for cells, modules, and cases of storage batteries, in addition to the bonding agent for a structural member. Examples include a bonding agent for bonding of an optical component, a bonding agent for bonding of an optical disk, a bonding agent for mounting of a printed wiring board, a bonding agent for die bonding, a bonding agent for semiconductor such as an underfill material, and a bonding agent for mounting such as an underfill material for BGA reinforcement, an anisotropic conductive film, and an anisotropic conductive paste.

Hereinbelow, representative examples of the products are described.

### 1. Semiconductor encapsulating material

As examples of the method for obtaining a semiconductor encapsulating material from the resin composition of the invention, there can be mentioned a method in which the resin composition, a curing accelerator, and ingredients, such as an inorganic filler, are satisfactorily melt-mixed, if necessary, using an extruder, a kneader, a roll, or the like until the resultant mixture becomes uniform. In this instance, as an inorganic filler, generally, fused silica is used, but, when the semiconductor encapsulating material obtained from the resin composition is used as a high thermal-conductivity semiconductor encapsulating material for power transistor or power IC, crystalline silica having a higher thermal conductivity than that of fused silica, a high filling filler, such as alumina or silicon nitride, or fused silica, crystalline silica, alumina, silicon nitride, or the like may be used. With respect to the filling ratio of the inorganic filter, an inorganic filler is preferably used in an amount in the range of from 30 to 95% by mass, relative to 100 parts by mass of the curable resin composition, and, especially, for improving the flame retardancy, moisture resistance, or resistance to solder crack, or for reducing the coefficient of linear expansion, an inorganic filler is more preferably used in an amount of 70 parts by mass or more, further preferably 80 parts by mass or more.

### 2. Semiconductor device

As semiconductor package molding for obtaining a semiconductor device from the curable resin composition of the invention, there can be mentioned a method in which the above-mentioned semiconductor encapsulating material is cast, or molded using a transfer molding machine, an injection molding machine, or the like, and further heated at 50 to 250°C for 2 to 10 hours.

### 3. Printed circuit board

As a method for obtaining a printed circuit board from the composition of the invention, there can be mentioned a method in which the above-mentioned prepreg is laminated by a general method, and a copper foil is appropriately stacked thereon, and the resultant laminate is heat-pressed under a pressure of 1 to 10 MPa at 170 to 300°C for 10 minutes to 3 hours.

### 4. Buildup substrate

As a method for obtaining a buildup substrate from the composition of the invention, for example, there can be mentioned the following steps. First, the composition having appropriately incorporated a rubber, a filler, and the like is applied to a circuit board having a circuit formed thereon using a spray coating method, a curtain coating method, or the like, and then cured (step 1). Then, if necessary, a predetermined through hole portion or the like is formed in the resultant circuit board, and then the board is treated with a roughening agent, and the treated surface is washed with warm water to form an uneven surface, followed by plating with a metal, such as copper (step 2). A cycle of such operations is successively repeated if desired, so that the resin insulating layer and the conductor layer of a predetermined circuit pattern are alternately built up (step 3). The formation of the through hole portion is performed after the resin insulating layer as the outermost layer is formed. With respect to the buildup substrate in the invention, when a copper foil with a resin obtained by semi-curing the resin composition on a copper foil is heat-pressed at 170 to 300°C onto a wiring board having a circuit formed thereon, the buildup substrate can be produced without the step for forming a roughened surface and plating treatment.

### 5. Buildup film

With respect to the method for obtaining a buildup film from the composition of the invention, a buildup film can be produced by applying the composition to the surface of a support film (Y) which is a substrate, and further drying the organic solvent by heating, or heated air blowing or the like to form a layer (X) of the composition.

With respect to the organic solvent used, for example, a ketone, such as acetone, methyl ethyl ketone, or cyclohexanone, an acetate, such as ethyl acetate, butyl acetate, cellosolve acetate, propylene glycol monomethyl ether acetate, or carbitol acetate, a carbitol, such as cellosolve or butyl carbitol, an aromatic hydrocarbon, such as toluene or xylene, dimethylformamide, dimethylacetamide, N-methylpyrrolidone, or the like is preferably used, and further it is preferred that the organic solvent is used in such a ratio that the nonvolatile content becomes 30 to 60% by mass.

The thickness of the formed layer (X) is generally the thickness of the conductor layer or more. The conductor layer in the circuit board generally has a thickness in the range of from 5 to 70 µm, and therefore the resin composition layer preferably has a thickness of 10 to 100 µm. The layer (X) of the composition in the invention may be protected by the below-mentioned protective film. By protecting the layer by the protective film, it is possible to prevent the surface of the resin composition layer from suffering deposition of dirt or the like or formation of a flaw.

As examples of the above-mentioned support film and protective film, there can be mentioned polyolefins, such as polyethylene, polypropylene, and polyvinyl chloride, polyesters, such as polyethylene terephthalate (hereinafter, frequently referred to simply as "PET") and polyethylene naphthalate, polycarbonate, polyimide, and further release paper and metal foils, such as a copper foil and an aluminum foil. The support film and protective film may have been subjected to matte treatment, corona treatment, or release treatment. With respect to the thickness of the support film, there is no particular limitation, but, generally, the support film used has a thickness of 10 to 150 µm, preferably in the range of from 25 to 50 µm. Further, the protective film preferably has a thickness of 1 to 40 µm.

The above-mentioned support film (Y) is released after being laminated on a circuit board, or after an insulating layer is formed by heat-curing. When the support film (Y) is released after the curable resin composition layer constituting the buildup film is cured by heating, it is possible to prevent deposition of dirt or the like in the curing step. When the support film is released after curing the resin composition, generally, the support film is preliminarily subjected to release treatment.

Using the buildup film obtained as mentioned above, a multilayer printed circuit board can be produced. For example, when the layer (X) is protected by a protective film, these are released, and then laminated on one surface or both surfaces of a circuit board so that the layer (X) is directly in contact with the circuit board by, for example, a vacuum lamination method. The method for lamination may be conducted either in a batch-wise manner or in a continuous manner using a roll. Further, if necessary, before being laminated, the buildup film and circuit board may be heated (preheated). With respect to the conditions for lamination, the pressing temperature (lamination temperature) is preferably 70 to 140°C, and the pressing pressure is preferably 1 to 11 kgf/cm2 (9.8 × 10⁴ to 107.9 × 10⁴ N/m²), and the lamination is preferably performed under an air pressure of 20 mmHg (26.7 hPa) or less which is a reduced pressure.

### 6. Conductive paste

As a method for obtaining a conductive paste from the composition of the invention, for example, there can be mentioned a method in which conductive particles are dispersed in the composition. Depending on the type of the conductive particles used in the conductive paste, the conductive paste can be used as a paste resin composition for circuit connection or an anisotropic conductive bonding agent.

### [Examples]

Hereinbelow, the present invention will be described in more detail with reference to the following Examples and Comparative Examples, and, in the following Examples and Comparative Examples, "part(s)" and "%" are given by mass unless otherwise specified.

The measurement of ¹H- and ¹³C-NMR, FD-MS spectrum, and GPC was conducted under the conditions shown below.
¹H-NMR: "JNM-ECA600", manufactured by JEOL RESONANCE Inc.
Magnetic field strength: 600 MHz
Accumulation times: 32
Solvent: DMSO-d₆
Sample concentration: 30% by mass
¹³C-NMR: "JNM-ECA600", manufactured by JEOL RESONANCE Inc.
Magnetic field strength: 150 MHz
Accumulation times: 320
Solvent: DMSO-d₆
Sample concentration: 30% by mass
FD-MS: "JMS-T100GC AccuTOF", manufactured by JEOL Ltd.
Measuring range: m/z = 50.00 to 2,000.00
Rate of change: 25.6 mA/min
Final current: 40 mA
Cathode voltage: -10 kV
GPC: "HLC-8320GPC", manufactured by Tosoh Corp.
Columns: "TSK-GEL G2000HXL" + "TSK-GEL G3000HXL" + "TSK-GEL G4000HXL", manufactured by Tosoh Corp.
Detector: RI (differential refractometer)
Conditions for measurement: 40°C
Mobile phase: Tetrahydrofuran
Flow rate: 1 ml/min
Standard: "PStQuick A", "PStQuick B", "PStQuick E", "PStQuick F", manufactured by Tosoh Corp.

With respect to the epoxy equivalent of the synthesized epoxy resin, the measurement was made in accordance with JIS K7236 to determine an epoxy equivalent (g/eq).

As examples of the method for determining the number of repeating units, there can be mentioned GPC molecular weight measurement, and determination from the results of an appropriate type of instrumental analysis, such as FD-MS or NMR.

### Synthesis Example 1

Into a flask equipped with a thermometer and a stirrer were charged 210 g (0.5 mol) of a diglycidyl ether of 1,12-dodecanediol (manufactured by Yokkaichi Chemical Co., Ltd.; epoxy equivalent: 210 g/eq) and 119.7 g (0.53 mol) of bisphenol A (hydroxyl equivalent: 114 g/eq), and the temperature of the resultant mixture was increased to 140°C over 30 minutes, and then 3.2 g of a 20% aqueous solution of sodium hydroxide was charged into the flask. Then, the temperature of the resultant mixture was increased to 150°C over 30 minutes, and further the reaction was conducted at 150°C for 16 hours. Subsequently, sodium phosphate in an amount required for neutralization was added to obtain 320 g of a hydroxy compound (Ph-1). With respect to the obtained hydroxy compound (Ph-1), in a mass spectrum, a peak of M+ = 771, which corresponds to the theoretical structure of the structural formula (Ph-1) below wherein m₁ = 1, and n₁ = 12, was obtained. From this, it was found that the hydroxy compound as a target was contained. The hydroxyl equivalent of the hydroxy compound (Ph-1) determined from GPC was 2,000 g/eq.

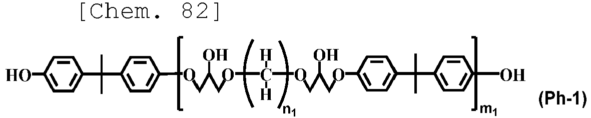

### Synthesis Example 2

A reaction was conducted in substantially the same manner as in Synthesis Example 1 except that 3.2 g of the 20% aqueous solution of sodium hydroxide used in Synthesis Example 1 was changed to 1.6 g of a 4% aqueous solution of sodium hydroxide, obtaining 321 g of a hydroxy compound (Ph-2). With respect to the obtained hydroxy compound (Ph-2), in a mass spectrum, a peak of M+ = 771, which corresponds to the theoretical structure of the structural formula (Ph-2) below wherein m₁ = 1, and n₁ = 12, was obtained. From this, it was found that the hydroxy compound as a target was contained. The hydroxyl equivalent of the hydroxy compound (Ph-2) determined from GPC was 850 g/eq.

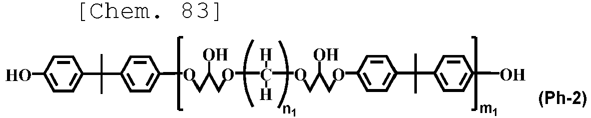

### Synthesis Example 3

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 236 g (0.5 mol) of a diglycidyl ether of 1,15-pentadecanediol (epoxy equivalent: 236 g/eq), obtaining 340 g of a hydroxy compound (Ph-3). With respect to the obtained hydroxy compound (Ph-3), in a mass spectrum, a peak of M+ = 813, which corresponds to the theoretical structure of the structural formula (Ph-3) below wherein m₁ = 1, and n₁ = 15, was obtained. From this, it was found that the hydroxy compound as a target was contained. The hydroxyl equivalent of the hydroxy compound (Ph-3) determined from GPC was 2,130 g/eq.

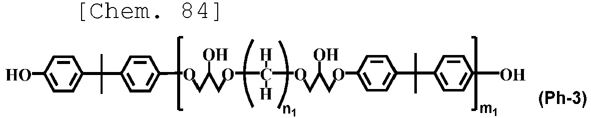

### Synthesis Example 4

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 190 g (0.5 mol) of a diglycidyl ether of 1,9-nonanediol (epoxy equivalent: 190 g/eq), obtaining 305 g of a hydroxy compound (Ph-4). With respect to the obtained hydroxy compound (Ph-4), in a mass spectrum, a peak of M+ = 729, which corresponds to the theoretical structure of the structural formula (Ph-4) below wherein m₁ = 1, and n₁ = 9, was obtained. From this, it was found that the hydroxy compound as a target was contained. The hydroxyl equivalent of the hydroxy compound (Ph-4) determined from GPC was 1,900 g/eq.

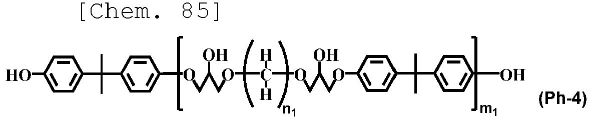

### Synthesis Example 5

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 160 g (0.5 mol) of a diglycidyl ether of 1,6-hexanediol (epoxy equivalent: 160 g/eq), obtaining 270 g of a hydroxy compound (Ph-5). With respect to the obtained hydroxy compound (Ph-5), in a mass spectrum, a peak of M+ = 687, which corresponds to the theoretical structure of the structural formula (Ph-5) below wherein m₁ = 1, and n₁ = 6, was obtained. From this, it was found that the hydroxy compound as a target was contained. The hydroxyl equivalent of the hydroxy compound (Ph-5) determined from GPC was 1,890 g/eq.

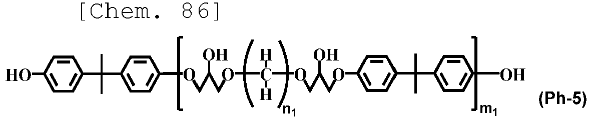

### Synthesis Example 6

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 445 g (0.5 mol) of a diglycidyl ether of polytetramethylene glycol ("Denacol EX-991L" manufactured by Nagase ChemteX Corporation; epoxy equivalent: 445 g/eq), obtaining 542 g of a hydroxy compound (Ph-6). With respect to the obtained hydroxy compound (Ph-6), in a mass spectrum, a peak of M+ = 1,380, which corresponds to the theoretical structure of the structural formula (Ph-6) below wherein m₂ = 1, and n₂ = 11, was obtained. From this, it was found that the hydroxy compound as a target was contained. The hydroxyl equivalent of the hydroxy compound (Ph-6) determined from GPC was 2,497 g/eq.

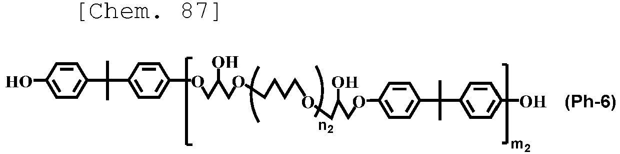

### Synthesis Example 7

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 312 g (0.35 mol) of a diglycidyl ether of polytetramethylene glycol ("Denacol EX-991L" manufactured by Nagase ChemteX Corporation; epoxy equivalent: 445 g/eq), obtaining 412 g of a hydroxy compound (Ph-7). With respect to the obtained hydroxy compound (Ph-7), in a mass spectrum, a peak of M+ = 1,380, which corresponds to the theoretical structure of the structural formula (Ph-7) below wherein m₂ = 1, and n₂ = 11, was obtained. From this, it was found that the hydroxy compound as a target was contained. The hydroxyl equivalent of the hydroxy compound (Ph-7) determined from GPC was 1,001 g/eq.

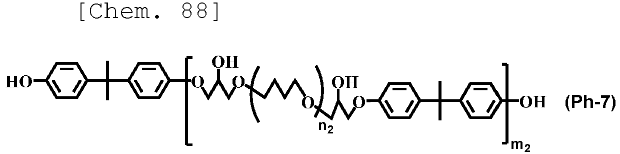

### Synthesis Example 8

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 481 g (0.5 mol) of a diglycidyl ether of polypropylene glycol ("Denacol EX-931" manufactured by Nagase ChemteX Corporation; epoxy equivalent: 481 g/eq), obtaining 585 g of a hydroxy compound (Ph-8). With respect to the obtained hydroxy compound (Ph-8), in a mass spectrum, a peak of M+ = 1,226, which corresponds to the theoretical structure of the structural formula (Ph-8) below wherein m₂ = 1, and n₂ = 11, was obtained. From this, it was found that the hydroxy compound as a target was contained. The hydroxyl equivalent of the hydroxy compound (Ph-8) determined from GPC was 1,447 g/eq.

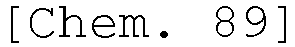

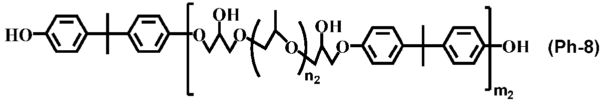

### Synthesis Example 9

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 136 g (0.43 mol) of a diglycidyl ether of 1,6-hexanediol ("SR-16H" manufactured by Sakamoto Yakuhin Kogyo Co., Ltd.; epoxy equivalent: 160 g/eq) and 66 g (0.07 mol) of a diglycidyl ether of polytetramethylene glycol ("Denacol EX-991L" manufactured by Nagase ChemteX Corporation; epoxy equivalent: 445 g/eq), obtaining 320 g of a hydroxy compound (Ph-9). With respect to the obtained hydroxy compound (Ph-9), in a mass spectrum, a peak of M+ = 1,839, which corresponds to the theoretical structure of the structural formula (Ph-9) below wherein n₁ = 6. m₁ = 1, n₂ = 11, and m₂ = 1, was obtained. From this, it was found that the hydroxy compound as a target was contained. The hydroxyl equivalent of the hydroxy compound (Ph-9) determined from GPC was 1,896 g/eq.

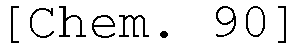

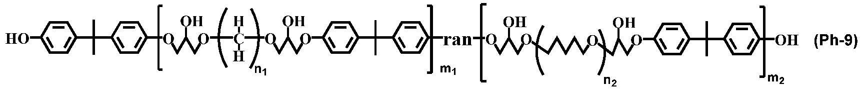

### Synthesis Example 10

A reaction was conducted in substantially the same manner as in Synthesis Example 1 except that 210 g (0.5 mol) of the diglycidyl ether of 1,12-dodecanediol (epoxy equivalent: 210 g/eq) used in Synthesis Example 1 was changed to 131.2 g (0.41 mol) of a diglycidyl ether of 1,6-hexanediol ("SR-16H" manufactured by Sakamoto Yakuhin Kogyo Co., Ltd.; epoxy equivalent: 160 g/eq) and 86.6 g (0.09 mol) of a diglycidyl ether of polypropylene glycol ("Denacol EX-931" manufactured by Nagase ChemteX Corporation; epoxy equivalent: 481 g/eq), obtaining 320 g of a hydroxy compound (Ph-10). With respect to the obtained hydroxy compound (Ph-10), in a mass spectrum, a peak of M+ = 1,684, which corresponds to the theoretical structure of the structural formula (Ph-10) below wherein n₁ = 6. m₁ = 1, n₂ = 11, and m₂ = 1, was obtained. From this, it was found that the hydroxy compound as a target was contained. The hydroxyl equivalent of the hydroxy compound (Ph-10) determined from GPC was 1,597 g/eq.

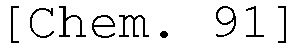

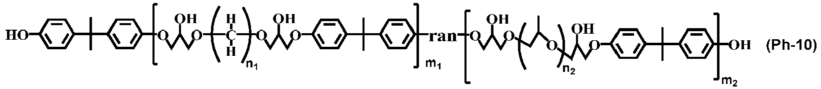

### Synthesis Example 11

Into a flask equipped with a thermometer, a dropping funnel, a condenser, and a stirrer were charged 200 g of the hydroxy compound (Ph-1) obtained in Synthesis Example 1, 437 g (4.72 mol) of epichlorohydrin, and 118 g of n-butanol, while purging the flask with nitrogen gas, so that the compound was dissolved. The temperature of the resultant solution was increased to 65°C, and then the pressure was reduced to a pressure under which an azeotrope was formed, and 6.66 g (0.08 mol) of a 49% aqueous solution of sodium hydroxide was dropwise added to the solution over 5 hours. Then, the resultant mixture was stirred under the same conditions for 0.5 hour. During the stirring, the distillate distilled off by azeotropic distillation was separated by means of a Dean-Stark trap, and the reaction was conducted while removing the aqueous layer and returning the oil layer into the reaction system. Then, the unreacted epichlorohydrin was distilled off by vacuum distillation. To the resultant crude epoxy resin were added 150 g of methyl isobutyl ketone and 150 g of n-butanol, dissolving the resin. Further, to the resultant solution was added 10 g of a 10% aqueous solution of sodium hydroxide, and the resultant mixture was subjected to reaction at 80°C for 2 hours, and then washed with 50 g of water three times until the pH of the washing water was neutral. Then, the inside of the reaction system was dehydrated by azeotropic distillation, and subjected to microfiltration, and then the solvent was distilled off under a reduced pressure to obtain 190 g of an epoxy resin (Ep-1). The obtained epoxy resin Ep-1 had an epoxy equivalent of 2,320 g/eq. With respect to the obtained epoxy resin (Ep-1), in a mass spectrum, a peak of M+ = 883, which corresponds to the theoretical structure of the structural formula (Ep-1) below wherein m₁ =1, n₁ = 12, p₁ = 0, p₂ = 0, and q =1, was obtained. From this, it was found that the epoxy resin (Ep-1) as a target was contained.

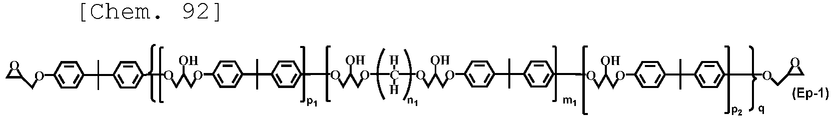

### Synthesis Example 12

A reaction was conducted in substantially the same manner as in Synthesis Example 11 except that 200 g of the hydroxy compound (Ph-1) obtained in Synthesis Example 1 was changed to 200 g of the hydroxy compound (Ph-2) obtained in Synthesis Example 2, obtaining 180 g of an epoxy resin (Ep-2). The obtained epoxy resin (Ep-2) had an epoxy equivalent of 1,040 g/eq. With respect to the epoxy resin (Ep-2), in a mass spectrum, a peak of M+ = 883, which corresponds to the theoretical structure of the structural formula (Ep-2) below wherein m₁ = 1, n₁ = 12, p₁ = 0, p₂ = 0, and q = 1, was obtained. From this, it was found that the epoxy resin (Ep-2) as a target was contained.

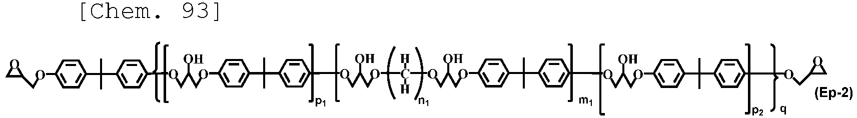

### Synthesis Example 13

A reaction was conducted in substantially the same manner as in Synthesis Example 11 except that 200 g of the hydroxy compound (Ph-1) obtained in Synthesis Example 1 was changed to 200 g of the hydroxy compound (Ph-3) obtained in Synthesis Example 3, obtaining 190 g of an epoxy resin (Ep-3). The obtained epoxy resin (Ep-3) had an epoxy equivalent of 2,510 g/eq. With respect to the epoxy resin (Ep-3), in a mass spectrum, a peak of M+ = 925, which corresponds to the theoretical structure of the structural formula (Ep-3) below wherein m₁ = 1, n₁ = 15, p₁ = 0, p₂ = 0, and q = 1, was obtained. From this, it was found that the epoxy resin (Ep-3) as a target was contained.

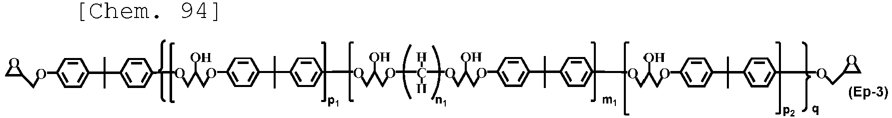

### Synthesis Example 14

A reaction was conducted in substantially the same manner as in Synthesis Example 11 except that 200 g of the hydroxy compound (Ph-1) obtained in Synthesis Example 1 was changed to 200 g of the hydroxy compound (Ph-4) obtained in Synthesis Example 4, obtaining 192 g of an epoxy resin (Ep-4). The obtained epoxy resin (Ep-4) had an epoxy equivalent of 2,250 g/eq. With respect to the epoxy resin (Ep-4), in a mass spectrum, a peak of M+ = 841, which corresponds to the theoretical structure of the structural formula (Ep-4) below wherein m₁ = 1, n₁ = 9, p₁ = 0, p₂ = 0, and q = 1, was obtained. From this, it was found that the epoxy resin (Ep-4) as a target was contained.

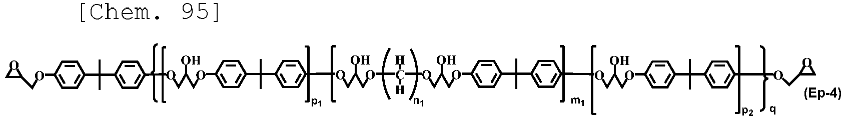

### Synthesis Example 15

A reaction was conducted in substantially the same manner as in Synthesis Example 11 except that 200 g of the hydroxy compound (Ph-1) obtained in Synthesis Example 1 was changed to 200 g of the hydroxy compound (Ph-5) obtained in Synthesis Example 5, obtaining 190 g of an epoxy resin (Ep-5). The obtained epoxy resin (Ep-5) had an epoxy equivalent of 2,244 g/eq. With respect to the epoxy resin (Ep-5), in a mass spectrum, a peak of M+ = 799, which corresponds to the theoretical structure of the structural formula (Ep-5) below wherein m₁ = 1, n₁ = 6, p₁ = 0, p₂ = 0, and q = 1, was obtained. From this, it was found that the epoxy resin (Ep-5) as a target was contained.

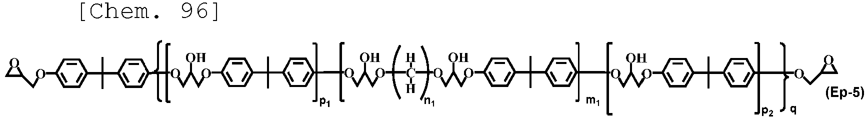

### Synthesis Example 16

A reaction was conducted in substantially the same manner as in Synthesis Example 11 except that 200 g of the hydroxy compound (Ph-1) obtained in Synthesis Example 1 was changed to 200 g of the hydroxy compound (Ph-6) obtained in Synthesis Example 6, obtaining 185 g of an epoxy resin (Ep-6). The obtained epoxy resin (Ep-6) had an epoxy equivalent of 2,834 g/eq. With respect to the epoxy resin (Ep-6), in a mass spectrum, a peak of M+ = 1,492, which corresponds to the theoretical structure of the structural formula (Ep-6) below wherein m₂ = 1, n₂ = 11, q = 1, p₁ = 0, and p₂ = 0, was obtained. From this, it was found that the epoxy resin (Ep-6) as a target was contained.

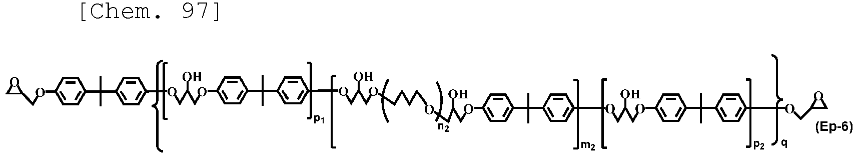

### [Synthesis Example 17]

A reaction was conducted in substantially the same manner as in Synthesis Example 11 except that 200 g of the hydroxy compound (Ph-1) obtained in Synthesis Example 1 was changed to 200 g of the hydroxy compound (Ph-7) obtained in Synthesis Example 7, obtaining 188 g of an epoxy resin (Ep-7). The obtained epoxy resin (Ep-7) had an epoxy equivalent of 1,286 g/eq. With respect to the epoxy resin (Ep-7), in a mass spectrum, a peak of M+ = 1,492, which corresponds to the theoretical structure of the structural formula (Ep-7) below wherein m₂ = 1, n₂ = 11, q = 1, p₁ = 0, and p₂ = 0, was obtained. From this, it was found that the epoxy resin (Ep-7) as a target was contained.

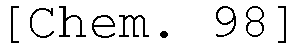

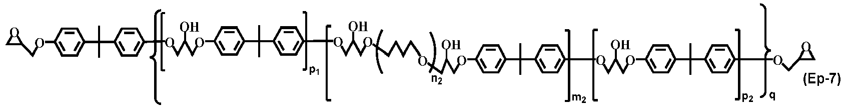

### Synthesis Example 18

A reaction was conducted in substantially the same manner as in Synthesis Example 11 except that 200 g of the hydroxy compound (Ph-1) obtained in Synthesis Example 1 was changed to 200 g of the hydroxy compound (Ph-8) obtained in Synthesis Example 8, obtaining 191 g of an epoxy resin (Ep-8). The obtained epoxy resin (Ep-8) had an epoxy equivalent of 1,668 g/eq. With respect to the epoxy resin (Ep-8), in a mass spectrum, a peak of M+ = 1338, which corresponds to the theoretical structure of the structural formula (Ep-8) below wherein m₂ = 1, n₂ = 11, q = 1, p₁ = 0, and p₂ = 0, was obtained. From this, it was found that the epoxy resin (Ep-8) as a target was contained.

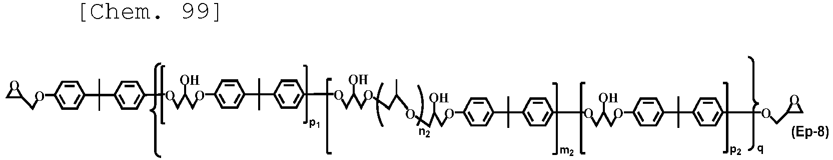

### Synthesis Example 19

A reaction was conducted in substantially the same manner as in Synthesis Example 11 except that 200 g of the hydroxy compound (Ph-1) obtained in Synthesis Example 1 was changed to 200 g of the hydroxy compound (Ph-9) obtained in Synthesis Example 9, obtaining 190 g of an epoxy resin (Ep-9). The obtained epoxy resin (Ep-9) had an epoxy equivalent of 2,167 g/eq. With respect to the epoxy resin (Ep-9), in a mass spectrum, a peak of M+ = 1,951, which corresponds to the theoretical structure of the structural formula (Ep-9) below wherein m₁ = 1, n₁ = 6, m₂ = 1, n₂ =11, q = 1, p₁ = 0, and p₂ = 0, was obtained. From this, it was found that the epoxy resin (Ep-9) of the structure as a target was contained.

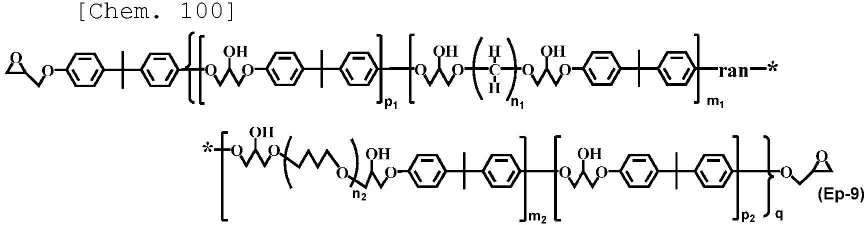

### Synthesis Example 20

A reaction was conducted in substantially the same manner as in Synthesis Example 11 except that 200 g of the hydroxy compound (Ph-1) obtained in Synthesis Example 1 was changed to 200 g of the hydroxy compound (Ph-10) obtained in Synthesis Example 10, obtaining 190 g of an epoxy resin (Ep-10). The obtained epoxy resin (Ep-10) had an epoxy equivalent of 1,835 g/eq. With respect to the epoxy resin (Ep-10), in a mass spectrum, a peak of M+ = 1,796, which corresponds to the theoretical structure of the structural formula (Ep-10) below wherein m₁ = 1, n₁ = 6, m₂ = 1, n₂ =11, q = 1, p₁ = 0, and p₂ = 0, was obtained. From this, it was found that the epoxy resin (Ep-10) of the structure as a target was contained.

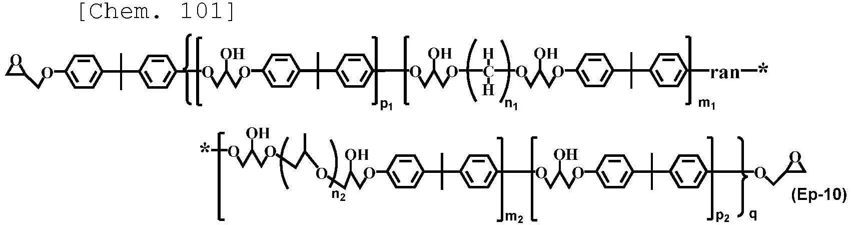

### Synthesis Example 21

A reaction was conducted in substantially the same manner as in Synthesis Example 1 except that 119.7 g (0.53 mol) of bisphenol A (hydroxyl equivalent: 114 g/eq) in Synthesis Example 1 was changed to 228 g (1.0 mol) of bisphenol A (hydroxyl equivalent: 114 g/eq), obtaining 420 g of a hydroxy compound (Ph-11). With respect to the obtained hydroxy compound (Ph-11), in a mass spectrum, a peak of M+ = 771, which corresponds to the theoretical structure of the structural formula (Ph-11) below wherein m₁ = 1 and n₁ = 12, was obtained. From this, it was found that the hydroxy compound as a target was contained. The hydroxyl equivalent of the hydroxy compound (Ph-11) determined from GPC was 340 g/eq.

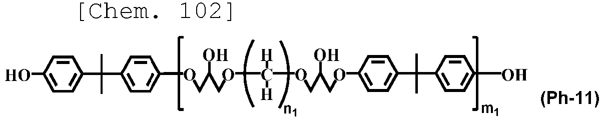

### Synthesis Example 22

A reaction was conducted in substantially the same manner as in Synthesis Example 11 except that 200 g of the hydroxy compound (Ph-1) obtained in Synthesis Example 1 was changed to 200 g of the hydroxy compound (Ph-11) obtained in Synthesis Example 21, obtaining 205 g of an epoxy resin (Ep-11). The obtained epoxy resin (Ep-11) had an epoxy equivalent of 461 g/eq. With respect to the epoxy resin (Ep-11), in a mass spectrum, a peak of M+ = 883, which corresponds to the theoretical structure of the structural formula (Ep-11) below wherein m₁ = 1, n₁ = 12, p1 =0, p2 =0, and q = 1, was obtained. From this, it was found that the epoxy resin (Ep-11) of the structure as a target was contained.

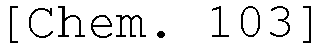

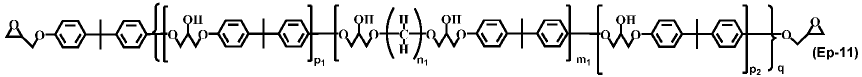

### Examples 1 to 14 and Comparative Examples 1 to 4

In accordance with the formulation shown in Tables 1 to 4, an epoxy resin, a filler, thermally expandable particles, a curing agent (1.0 equivalent with respect to the epoxy), a curing accelerator (0.85 part by mass relative to 100 parts by mass of a total of the epoxy resins) were uniformly mixed by means of a mixer ("THINKY MIXER ARV-200", manufactured by THINKY Corporation) to obtain an epoxy resin composition. The obtained epoxy resin composition was placed between aluminum specular surface plates ("JIS H 4000 A1050P", manufactured by Engineering Test Service Co., Ltd.) using a silicone tube as a spacer, and cured by heating at 170°C for 30 minutes to obtain a resin cured product having a thickness of 0.8 mm.

### Glass Transition Temperature

The cured product having a thickness of 0.7 mm was cut into a size having a width of 5 mm and a length of 40 mm, and this cut piece was used as a test specimen. With respect to the test specimen 1, using a viscoelasticity measuring apparatus (DMA: solid viscoelasticity measuring apparatus "DMS7100", manufactured by Hitachi High-Tech Science Corporation; deformation mode: pull; measurement mode: sinusoidal vibration; frequency: 1 Hz; temperature elevation rate: 3°C/minute), the peak top temperature of tanδ was evaluated as a glass transition temperature. When there are a plurality of peak tops, they are listed in the tables with the assumption that there are a plurality of glass transition temperatures.

### Tensile test

The cured product was punched into a dumbbell shape (JIS K 7161-2-1BA) using a punch cutter, and this dumbbell was used as a test specimen. With respect to the test specimen, using a tensile tester ("Autograph AG-IS", manufactured by Shimadzu Corporation), a tensile test was conducted in accordance with JIS K 7162-2, and an elongation at break in a measurement environment at 23°C was evaluated (test rate: 2 mm/min).

### Tensile shear test

The resin composition was applied to one of two cold-rolled steel plates ("SPCC-SB", manufactured by TP Giken Co., Ltd.; 1.0 mm × 25 mm × 100 mm), and glass beads ("J-80", manufactured by Potters-Ballotini Co., Ltd.) were added as a spacer, and another SPCC-SB was put thereon (bond area: 25 mm × 12.5 mm). The resultant material was cured by heating at 170°C for 30 minutes to obtain a test specimen. The adhesion properties were evaluated by conducting a tensile shear test using the obtained test specimen. The test was conducted in accordance with JIS K 6850, and a comparison was made in respect of the maximum stress in a measurement environment at 23°C.

Initial adhesive strength: The produced test specimen was subjected to a shear test without any particular treatment.

Adhesive strength after heating: The produced test specimen was heated at 200°C for 30 minutes in a heating dryer and then subjected to a shear test. A strength reduction rate was calculated by "(initial adhesive strength - adhesive strength after heating)/initial adhesive strength × 100".

### Structural periodicity

A cross-section of the resin cured product was prepared using an ultramicrotome, and observation of a phase separation structure was conducted. The observation was conducted with a scanning electron microscope (SEM) so that morphology contrast was able to be clearly discerned. By the SEM observation, it is possible to find out whether or not the cured product has a phase separation structure therein. When the cured product had a phase separation structure which forms an "island-in-sea" configuration, a particle diameter of the "island" portion was measured. With respect to the determination of an average of the particle diameters, 50 "island" portions were arbitrarily extracted from the "island" portions in the 200 µm × 260 µm field of view, and particle diameters of the extracted "island" portions were measured, and an average particle diameter was determined.

### SEM

Type of the apparatus used: JSM-7800F, manufactured by JEOL Ltd.
Accelerating voltage: 5 kV

**[Table 1]**

| | | | Examples | | | | |
|---|---|---|---|---|---|---|---|
| | | | 1 | 2 | 3 | 4 | 5 |
| | | Ep-1 | 67 | 67 | 67 | 67 | 55 |
| | | Ep-2 | | | | | |
| | | Ep-3 | | | | | |
| | | Ep-4 | | | | | |
| | | Ep-5 | | | | | |
| Epoxy resin (A) | | Ep-6 | | | | | |
| | | Ep-7 | | | | | |
| | | Ep-8 | | | | | |
| | | Ep-9 | | | | | |
| | | Ep-10 | | | | | |
| | | Ep-11 | | | | | |
| Epoxy resin (B) | | 850S | 33 | 33 | 33 | 33 | 45 |
| Filler | | CaCO3 | | 20 | 30 | 20 | |
| Thermally expandable particles (C) | | F-260D | 10 | 10 | 10 | 20 | 10 |
| Curing agent (D) | | DICY | 4.3 | 4.3 | 4.3 | 4.3 | 5.5 |
| Curing accelerator | | DCMU | 0.85 | 0.85 | 0.85 | 0.85 | 0.85 |
| Glass transition temperature (°C) | | | 12,123 | 15,126 | 15,127 | 12,120 | 21,129 |
| Tensile test | Elongation at break (%) | | 101 | 90 | 89 | 87 | 68 |
| Tensile shear test | Maximum stress (MPa) | Initial adhesive strength | 17.5 | 17.8 | 17 | 16.3 | 17.4 |
| | | Adhesive strength after heating | 1.6 | 1.7 | 1.9 | 1.3 | 2.5 |
| | | Strength reduction rate (%) | 90.9 | 90.4 | 88.8 | 92.0 | 85.6 |
| Observation result of structural periodicity | | Configuration | Island-in-sea | Island-in-sea | Island-in-sea | Island-in-sea | Island-in-sea |
| | | Particle diameter (µm) | 1.1 | 1.1 | 1.0 | 1 | 1.0 |

**[Table 2]**

| | | | Examples | | | | |
|---|---|---|---|---|---|---|---|
| | | | 6 | 7 | 8 | 9 | 10 |
| | | Ep-1 | 38 | | | | |
| | | Ep-2 | | 55 | | | |
| | | Ep-3 | | | 55 | | |
| | | Ep-4 | | | | 55 | |
| | | Ep-5 | | | | | |
| Epoxy resin (A) | | Ep-6 | | | | | |
| | | Ep-7 | | | | | |
| | | Ep-8 | | | | | |
| | | Ep-9 | | | | | 55 |
| | | Ep-10 | | | | | |
| | | Ep-11 | | | | | |
| Epoxy resin (B) | | 850S | 62 | 45 | 45 | 45 | 45 |
| Filler | | CaCO3 | | | | | |
| Thermally expandable particles (C) | | F-260D | 10 | 10 | 10 | 10 | 10 |
| Curing agent (D) | | DICY | 7.3 | 6.1 | 5.5 | 5.5 | 5.6 |
| Curing accelerator | | DCMU | 0.85 | 0.85 | 0.85 | 0.85 | 0.85 |
| Glass transition temperature (°C) | | | 17,128 | 55,109 | 16,125 | 38,129 | 49,116 |
| Tensile test | Elongation at break (%) | | 11 | 48 | 63 | 37 | 46 |
| Tensile shear test | Maximum stress (MPa) | Initial adhesive strength | 14.6 | 17.2 | 13.9 | 12.7 | 17.1 |
| | | Adhesive strength after heating | 2.6 | 2.1 | 2.6 | 2.2 | 2.9 |
| | | Strength reduction rate (%) | 82.2 | 87.8 | 81.3 | 82.7 | 83.0 |
| Observation result of structural periodicity | | Configuration | Island-in-sea | Island-in-sea | Island-in-sea | Island-in-sea | Island-in-sea |
| | | Particle diameter (µm) | 2.1 | 0.7 | 1.2 | 0.9 | 0.9 |

**[Table 3]**

| | | | Examples | | | |
|---|---|---|---|---|---|---|
| | | | 11 | 12 | 13 | 14 |
| | | Ep-1 | | | | |
| | | Ep-2 | | | | |
| | | Ep-3 | | | | |
| | | Ep-4 | | | | |
| | | Ep-5 | | 20 | 20 | |
| Epoxy resin (A) | | Ep-6 | | 35 | | |
| | | Ep-7 | | | | 55 |
| | | Ep-8 | | | 35 | |
| | | Ep-9 | | | | |
| | | Ep-10 | 55 | | | |
| | | Ep-11 | | | | |
| Epoxy resin (B) | | 850S | 45 | 45 | 45 | 45 |
| Filler | | CaCO3 | | | | |
| Thermally expandable particles (C) | | F-260D | 10 | 10 | 10 | 10 |
| Curing agent (D) | | DICY | 5.7 | 5.5 | 5.7 | 5.9 |
| Curing accelerator | | DCMU | 0.85 | 0.85 | 0.85 | 0.85 |
| Glass transition temperature (°C) | | | 12, 90 | 37,116 | 10,85 | 3,116 |
| Tensile test | Elongation at break (%) | | 36 | 40 | 36 | 24 |
| Tensile shear | Maximum | Initial adhesive | 16.9 | 16.5 | 16.1 | 12.5 |
| test | stress (MPa) | strength | | | | |
| | | Adhesive strength after heating | 2.9 | 2.4 | 2.2 | 1.1 |
| | | Strength reduction rate (%) | 82.8 | 85.5 | 86.3 | 91.2 |
| Observation result of structural periodicity | | Configuration | Island-in-sea | Island-in-sea | Island-in-sea | Island-in-sea |
| | | Particle diameter (µm) | 0.8 | 1.0 | 0.8 | 0.9 |

**[Table 4]**

| | | | Comparative Examples | | | |
|---|---|---|---|---|---|---|
| | | | 1 | 2 | 3 | 4 |
| | Ep-1 | | 67 | | | 100 |
| | Ep-2 | | | | | |
| | Ep-3 | | | | | |
| | Ep-4 | | | | | |
| | Ep-5 | | | | | |
| Epoxy resin (A) | Ep-6 | | | | | |
| | Ep-7 | | | | | |
| | Ep-8 | | | | | |
| | Ep-9 | | | | | |
| | Ep-10 | | | | | |
| | Ep-11 | | | | 100 | |
| Epoxy resin (B) | 850S | | 33 | 100 | | |
| Filler | CaCO3 | | 20 | | | |
| Thermally expandable particles (C) | F-260D | | | 10 | 10 | 10 |
| Curing agent (D) | DICY | | 4.3 | 11.2 | 4.6 | 0.9 |
| Curing accelerator | DCMU | | 0.85 | 0.85 | 0.85 | 0.85 |
| Glass transition temperature (°C) | | | 18,129 | 126 | 31 | - |
| Tensile test | Elongation at break (%) | | 94 | <1 | 99 | - |
| Tensile shear test | Maximum | Initial adhesive | 18.1 | 12.1 | 17.9 | - |
| | stress (MPa) | strength | | | | |
| | | Adhesive strength after heating | 17.9 | 12.8 | 18.2 | - |
| | | Strength reduction rate (%) | 1.1 | -5.8 | -1.7 | - |
| Observation result of structural periodicity | Configuration | | Island-in-sea | None | None | - |
| | Particle diameter (µm) | | 1.1 | - | - | - |

The ingredients shown in the tables are as follows.
Epoxy resin B: Epoxy resin EPICLON 850S (bisphenol A liquid epoxy resin; epoxy equivalent: 188 g/eq), manufactured by DIC Corporation
Filler: CaCO3, manufactured by Ohmi Chemical Industry Co., Ltd.
Thermally expandable fine particles: Microcapsule F-260D, manufactured by Matsumoto Yushi-Seiyaku Co., Ltd.
Curing agent: Dicyandiamide DICY7, manufactured by Mitsubishi Chemical Corporation
Curing accelerator: B-605-IM (3-(3,4-dichlorophenyl)-1,1-dimethylurea), manufactured by DIC Corporation

In Comparative Example 4, the resin was not cured in a specified curing time, so that the evaluation could not be made.

## Claims

1. An epoxy resin composition containing:
an epoxy resin (A) having an epoxy equivalent of 500 to 10,000 g/eq, as measured in accordance with JIS K7236, and represented by the general formula (1) below: 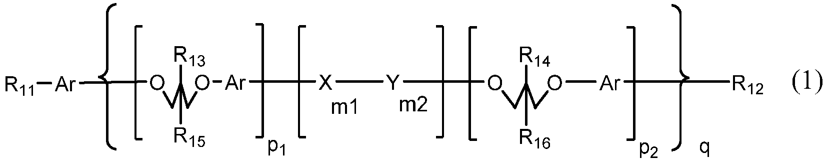
wherein, in the formula (1), each Ar is independently a structure having an aromatic ring being unsubstituted or having a substituent,
X is a structural unit represented by the general formula (2) below, and Y is a structural unit represented by the general formula (3) below: 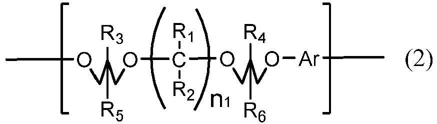 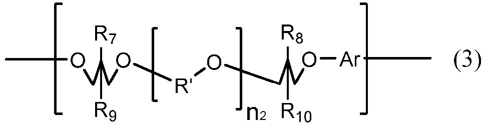
wherein in the formulae (2) and (3), Ar is the same as above,
each of R₁ and R₂ is independently a hydrogen atom, a methyl group, or an ethyl group,
R' is a divalent hydrocarbon group having 2 to 12 carbon atoms,
each of R₃, R₄, R₇, and R₈ is independently a hydroxyl group, a glycidyl ether group, or a 2-methylglycidyl ether group,
each of R₅, R₆, R₉, and R₁₀ is independently a hydrogen atom or a methyl group,
n1 is an integer of 4 to 16,
n2 is an average of the number of repeating units, and 2 to 30,
each of R₁₁ and R₁₂ is independently a glycidyl ether group or a 2-methyl glycidyl ether group,
each of R₁₃ and R₁₄ is independently a hydroxyl group, a glycidyl ether group, or a 2-methyl glycidyl ether group,
R₁₅ and R₁₆ are a hydrogen atom or a methyl group,
m1, m2, p1, p2, and q are an average of the number of repeating units,
each of m1 and m2 is independently 0 to 25, and m1 + m2 ≥ 1,
each of p1 and p2 is independently 0 to 5, and
q is 0.5 to 5, wherein, a bond between X represented by the general formula (2) above and Y represented by the general formula (3) above is optionally random or block, indicating that the total numbers of the numbers of the structural units X and Y present in one molecule are m1 and m2, respectively;
an epoxy resin (B) having an epoxy equivalent of 100 to 300 g/eq, as measured in accordance with JIS K7236; and
thermally expandable particles (C).

2. The epoxy resin composition according to claim 1, wherein each of Ar in the general formulae (1) to (3) above is independently any one represented by the structural formula (4) below: 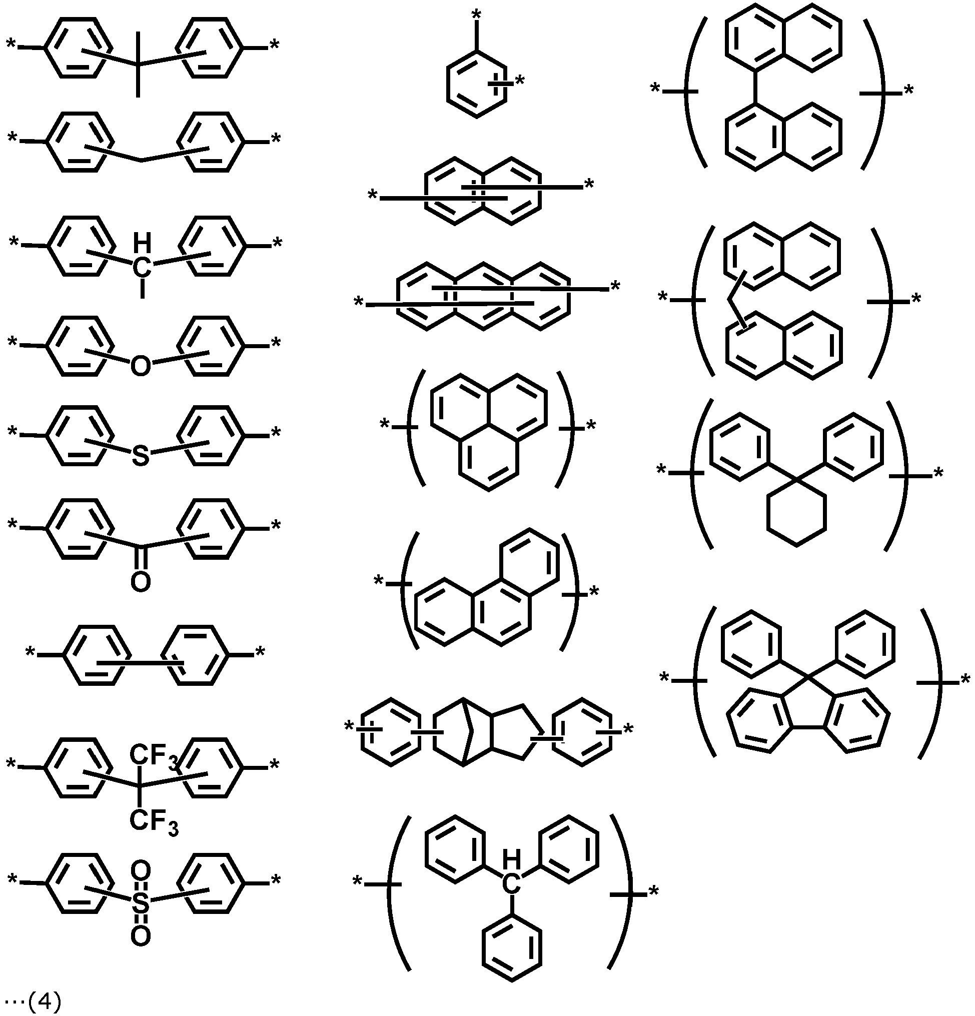 wherein, the aromatic ring in the formula (4) is substituted or unsubstituted, and * represents a bonding site.

3. The epoxy resin composition according to claim 1 or 2, wherein n1 in the general formula (2) above is 6 to 12, R₃ and R₄ are a hydroxy group, and R₅ and R₆ are a hydrogen atom.

4. The epoxy resin composition according to any one of claims 1 to 3, wherein, in the general formula (3) above, R' is a divalent hydrocarbon group having 2 to 6 carbon atoms, R₇ and R₈ are a hydroxy group, and R₉ and R₁₀ are a hydroxy group.

5. The epoxy resin composition according to any one of claims 1 to 4, wherein the epoxy resin (A) has an epoxy equivalent in the range of 800 to 5,000 g/eq, as measured in accordance with JIS K7236.

6. The epoxy resin composition according to any one of claims 1 to 5, wherein a mass ratio (A):(B) between the epoxy resin (A) and the epoxy resin (B) is 90:10 to 10:90.

7. The epoxy resin composition according to any one of claims 1 to 6, further containing a curing agent (D).

8. The epoxy resin composition according to any one of claims 1 to 7, wherein the thermally expandable particles (C) are thermally expandable microcapsules.

9. The epoxy resin composition according to claim 8, wherein the thermally expandable particles (C) are thermally expandable microcapsules with a polymer obtained by polymerizing a nitrile-based monomer and a monomer having a carboxy group as an essential component as an outer shell polymer.

10. The epoxy resin composition according to any one of claims 1 to 9, wherein a ratio of the thermally expandable particles (C) used is in the range of 3 to 40 parts by mass relative to 100 parts by mass of a total of the epoxy resin (A) and the epoxy resin (B).

11. The epoxy resin composition according to any one of claims 1 to 10, which is a bonding agent.

12. A cured product of the epoxy resin composition according to any one of claims 1 to 11.

13. A laminate obtained by laminating a substrate and the cured product according to claim 12.

14. A laminate obtained by laminating a first substrate, a layer containing the cured product according to claim 12, and a second substrate in this order.

15. The laminate according to claim 14, wherein the first substrate is a substrate formed of a metal or a metal oxide and the second substrate is a substrate formed of a plastic.

## Patentansprüche

1. Epoxidharzzusammensetzung, enthaltend:
ein Epoxidharz (A) mit einem Epoxidäquivalent von 500 bis 10.000 g/Äq, gemessen gemäß JIS K7236, und dargestellt durch die nachstehende allgemeine Formel (1): 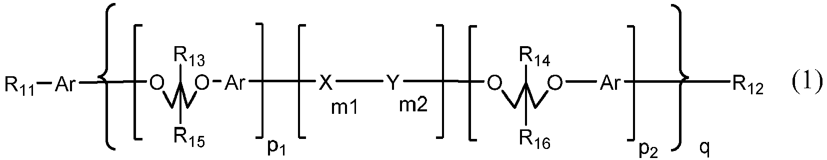
wobei in der Formel (1) jedes Ar unabhängig eine Struktur mit einem aromatischen Ring ist, der unsubstituiert ist oder einen Substituenten aufweist,
X eine Struktureinheit ist, die durch die nachstehende allgemeine Formel (2) dargestellt wird, und Y eine Struktureinheit ist, die durch die nachstehende allgemeine Formel (3) dargestellt wird: 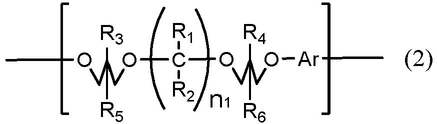 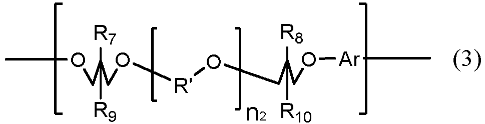
wobei in den Formeln (2) und (3) Ar das gleiche wie oben ist,
jedes aus R₁ und R₂ unabhängig ein Wasserstoffatom, eine Methylgruppe oder eine Ethylgruppe ist,
R' eine zweiwertige Kohlenwasserstoffgruppe mit 2 bis 12 Kohlenstoffatomen ist,
jedes aus R₃, R₄, R₇ und R₈ jeweils unabhängig voneinander eine Hydroxylgruppe, eine Glycidylethergruppe oder eine 2-Methylglycidylethergruppe sind,
jedes aus R₅, R₆, R₉ und R₁₀ unabhängig ein Wasserstoffatom oder eine Methylgruppe ist,
n1 eine ganze Zahl von 4 bis 16 ist,
n2 ein Durchschnitt der Anzahl an Wiederholungseinheiten ist und 2 bis 30 ist,
jedes aus R₁₁ und R₁₂ unabhängig eine Glycidylethergruppe oder eine 2-Methylglycidylethergruppe ist,
jedes R₁₃ und R₁₄ unabhängig eine Hydroxylgruppe, eine Glycidylethergruppe oder eine 2-Methylglycidylethergruppe ist,
R₁₅ und R₁₆ ein Wasserstoffatom oder eine Methylgruppe sind,
m1, m2, p1, p2 und q ein Durchschnitt der Anzahl Wiederholungseinheiten sind,
jedes aus m1 und m2 unabhängig 0 bis 25 ist und m1 + m2 ≥ 1 ist,
jedes aus p1 und p2 ist unabhängig 0 bis 5 ist und
q 0,5 bis 5 ist, wobei eine Bindung zwischen X, dargestellt durch die obige allgemeine Formel (2), und Y, dargestellt durch die obige allgemeine Formel (3), optional statistisch oder blockartig ist, was anzeigt, dass die Gesamtzahl der Struktureinheiten X bzw. Y, die in einem Molekül vorhanden sind, m1 bzw. m2 ist;
ein Epoxidharz (B) mit einem Epoxidäquivalent von 100 bis 300 g/Äq, gemessen gemäß JIS K7236; und
thermisch expandierbare Teilchen (C).

2. Epoxidharzzusammensetzung nach Anspruch 1, wobei jedes Ar in den allgemeinen Formeln (1) bis (3) oben unabhängig irgendeines ist, das durch die nachstehende Strukturformel (4) dargestellt ist: 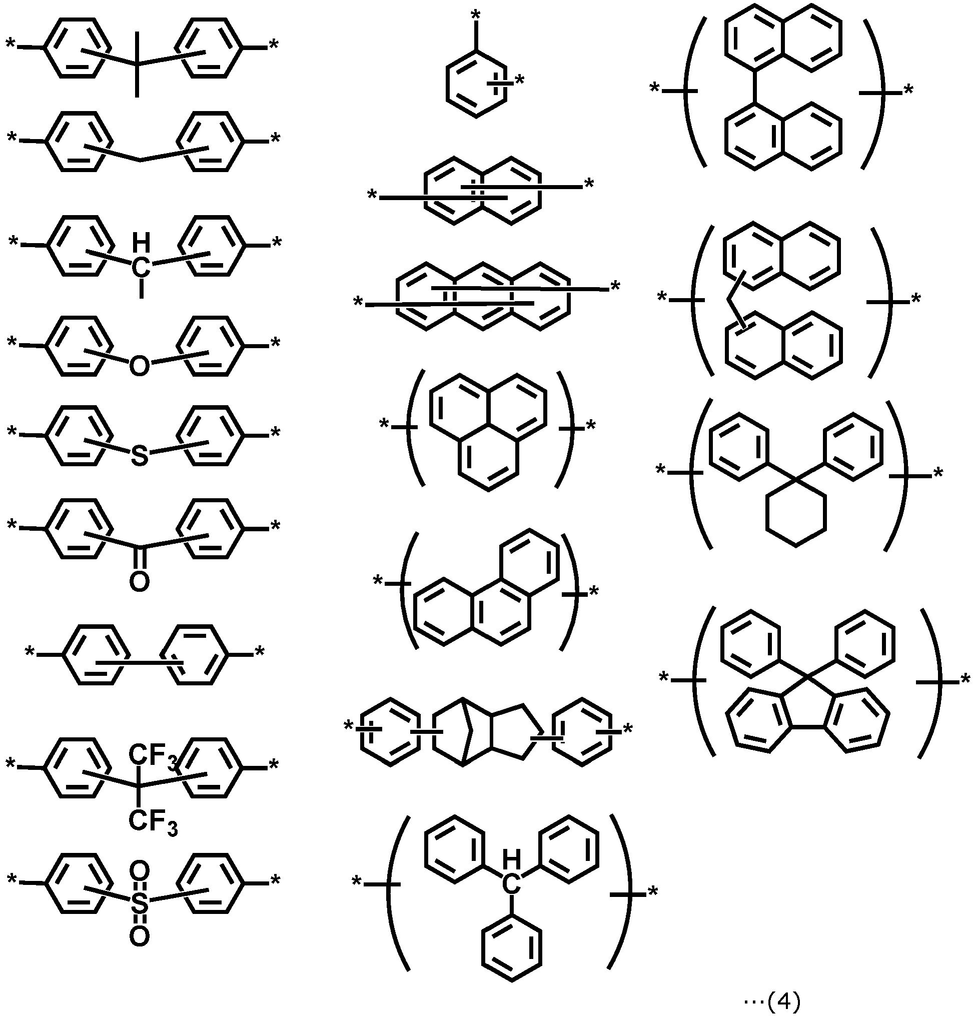 wobei der aromatische Ring in Formel (4) substituiert oder unsubstituiert ist und * eine Bindungsstelle darstellt.

3. Epoxidharzzusammensetzung nach Anspruch 1 oder 2, wobei n1 in der obigen allgemeinen Formel (2) 6 bis 12 ist, R₃ und R₄ eine Hydroxygruppe sind und R₅ und R₆ ein Wasserstoffatom sind.

4. Epoxidharzzusammensetzung nach einem der Ansprüche 1 bis 3, wobei in der obigen allgemeinen Formel (3) R' eine zweiwertige Kohlenwasserstoffgruppe mit 2 bis 6 Kohlenstoffatomen ist, R₇ und R₈ eine Hydroxygruppe sind und R₉ und R₁₀ eine Hydroxygruppe sind.

5. Epoxidharzzusammensetzung nach einem der Ansprüche 1 bis 4, wobei das Epoxidharz (A) ein Epoxidäquivalent im Bereich von 800 bis 5000 g/Äq, gemessen gemäß JIS K7236, aufweist.

6. Epoxidharzzusammensetzung nach einem der Ansprüche 1 bis 5, wobei das Massenverhältnis (A):(B) zwischen dem Epoxidharz (A) und dem Epoxidharz (B) 90:10 bis 10:90 beträgt.

7. Epoxidharzzusammensetzung nach einem der Ansprüche 1 bis 6, die ferner ein Härtungsmittel (D) enthält.

8. Epoxidharzzusammensetzung nach einem der Ansprüche 1 bis 7, wobei die thermisch expandierbaren Teilchen (C) thermisch expandierbare Mikrokapseln sind.

9. Epoxidharzzusammensetzung nach Anspruch 8, wobei die thermisch expandierbaren Teilchen (C) thermisch expandierbare Mikrokapseln mit einem Polymer sind, das durch Polymerisieren eines Monomers auf Nitrilbasis und eines Monomers mit einer Carboxygruppe als wesentlicher Bestandteil als Polymer der äußeren Hülle erhalten ist.

10. Epoxidharzzusammensetzung nach einem der Ansprüche 1 bis 9, wobei das Verhältnis der verwendeten thermisch expandierbaren Teilchen (C) im Bereich von 3 bis 40 Masseteilen, bezogen auf 100 Masseteile der Gesamtmenge des Epoxidharzes (A) und des Epoxidharzes (B), liegt.

11. Epoxidharzzusammensetzung nach einem der Ansprüche 1 bis 10, die ein Bindemittel ist.

12. Gehärtetes Produkt der Epoxidharzzusammensetzung nach einem der Ansprüche 1 bis 11.

13. Laminat, das durch Laminieren eines Substrats und des gehärteten Produkts nach Anspruch 12 erhalten ist.

14. Laminat, das durch Laminieren eines ersten Substrats, einer Schicht, die das gehärtete Produkt nach Anspruch 12 enthält, und eines zweiten Substrats in dieser Reihenfolge erhalten ist.

15. Laminat nach Anspruch 14, wobei das erste Substrat ein aus einem Metall oder einem Metalloxid gebildetes Substrat ist und das zweite Substrat ein aus einem Kunststoff gebildetes Substrat ist.

## Revendications

1. Composition de résine époxy contenant :
une résine époxy (A) ayant un équivalent époxy de 500 à 10 000 g/eq, mesuré conformément à la norme JIS K7236, et représentée par la formule générale (1) ci-dessous : 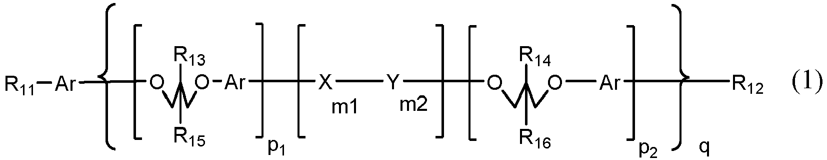
dans laquelle, dans la formule (1), chaque Ar est indépendamment une structure ayant un noyau aromatique étant non substitué ou ayant un substituant,
X est une unité structurelle représentée par la formule générale (2) ci-dessous, et Y est une unité structurelle représentée par la formule générale (3) ci-dessous : 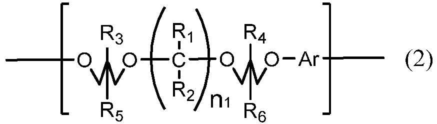 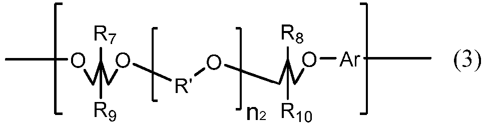
dans laquelle dans les formules (2) et (3), Ar est le même que ci-dessus,
chacun de R₁ et R₂ est indépendamment un atome d'hydrogène, un groupe méthyle ou un groupe éthyle,
R' est un groupe hydrocarbure divalent ayant de 2 à 12 atomes de carbone,
chacun de R₃, R₄, R₇ et R₈ est indépendamment un groupe hydroxyle, un groupe éther de glycidyle ou un groupe éther de 2-méthylglycidyle,
chacun de R₅, R₆, R₉ et R₁₀ est indépendamment un atome d'hydrogène ou un groupe méthyle,
n1 est un entier de 4 à 16,
n2 est une moyenne du nombre d'unités répétitives, et de 2 à 30,
chacun de R₁₁ et R₁₂ est indépendamment un groupe éther de glycidyle ou un groupe éther de 2-méthylglycidyle,
chacun de R₁₃ et R₁₄ est indépendamment un groupe hydroxyle, un groupe éther de glycidyle ou un groupe éther de 2-méthylglycidyle,
R₁₅ et R₁₆ sont un atome d'hydrogène ou un groupe méthyle,
m1, m2, p1, p2 et q sont une moyenne du nombre d'unités répétitives,
chacun de m1 et m2 est indépendamment de 0 à 25, et m1 + m2 ≥ 1,
chacun de p1 et p2 est indépendamment de 0 à 5, et
q est de 0,5 à 5, dans lequel une liaison entre X représenté par la formule générale (2) ci-dessus et Y représenté par la formule générale (3) ci-dessus est facultativement aléatoire ou bloc, ce qui indique que les nombres totaux des nombres des unités structurelles X et Y présentes dans une molécule sont m1 et m2, respectivement ;
une résine époxy (B) ayant un équivalent époxy de 100 à 300 g/eq, mesuré conformément à la norme JIS K7236 ; et
des particules thermiquement expansibles (C).

2. Composition de résine époxy selon la revendication 1, dans laquelle chacun de Ar dans les formules générales (1) à (3) ci-dessus est indépendamment représenté par la formule structurelle (4) ci-dessous : 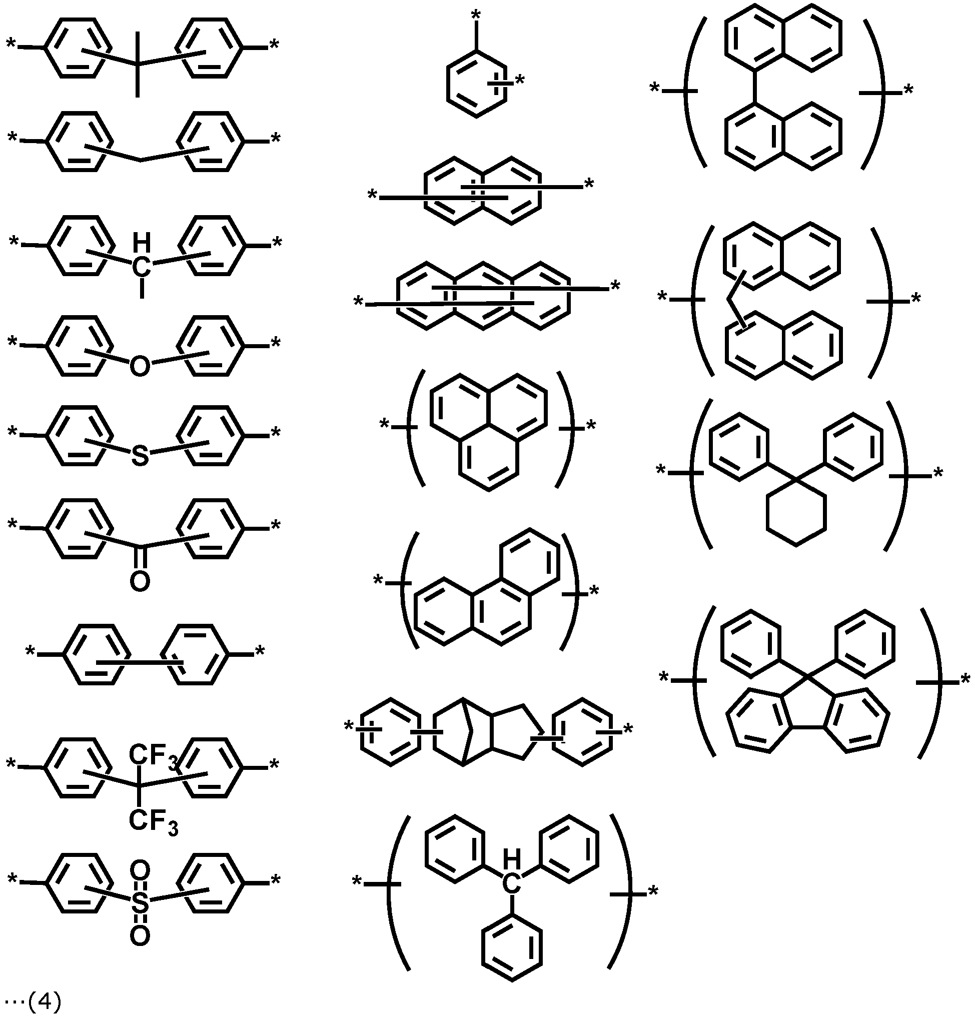 dans laquelle le noyau aromatique de la formule (4) est substitué ou non substitué, et * représente un site de liaison.

3. Composition de résine époxy selon la revendication 1 ou 2, dans laquelle n1 dans la formule générale (2) ci-dessus est de 6 à 12, R₃ et R₄ sont un groupe hydroxy, et R₅ et R₆ sont un atome d'hydrogène.

4. Composition de résine époxy selon l'une quelconque des revendications 1 à 3, dans laquelle, dans la formule générale (3) ci-dessus, R' est un groupe hydrocarbure divalent ayant de 2 à 6 atomes de carbone, R₇ et R₈ sont un groupe hydroxy, et R₉ et R₁₀ sont un groupe hydroxy.

5. Composition de résine époxy selon l'une quelconque des revendications 1 à 4, dans laquelle la résine époxy (A) a un équivalent époxy dans la plage de 800 à 5 000 g/eq, mesuré conformément à la norme JIS K7236.

6. Composition de résine époxy selon l'une quelconque des revendications 1 à 5, dans laquelle un rapport de masse (A):(B) entre la résine époxy (A) et la résine époxy (B) est de 90:10 à 10:90.

7. Composition de résine époxy selon l'une quelconque des revendications 1 à 6, contenant en outre un agent de durcissement (D).

8. Composition de résine époxy selon l'une quelconque des revendications 1 à 7, dans laquelle les particules thermiquement expansibles (C) sont des microcapsules thermiquement expansibles.

9. Composition de résine époxy selon la revendication 8, dans laquelle les particules thermiquement expansibles (C) sont des microcapsules thermiquement expansibles avec un polymère obtenu par polymérisation d'un monomère à base de nitrile et d'un monomère ayant un groupe carboxy comme un composant essentiel en tant que polymère d'enveloppe extérieure.

10. Composition de résine époxy selon l'une quelconque des revendications 1 à 9, dans laquelle un rapport entre les particules thermiquement expansibles (C) utilisées est dans la plage de 3 à 40 parties en masse par rapport à 100 parties en masse d'un total de la résine époxy (A) et de la résine époxy (B).

11. Composition de résine époxy selon l'une quelconque des revendications 1 à 10, qui est un agent de liaison.

12. Produit durci de la composition de résine époxy selon l'une quelconque des revendications 1 à 11.

13. Stratifié obtenu par stratification d'un substrat et du produit durci selon la revendication 12.

14. Stratifié obtenu par stratification d'un premier substrat, d'une couche contenant le produit durci selon la revendication 12, et d'un second substrat dans cet ordre.

15. Stratifié selon la revendication 14, dans lequel le premier substrat est un substrat formé d'un métal ou d'un oxyde métallique et le second substrat est un substrat formé d'un plastique.
